**Europäisches Patentamt**

(19) **European Patent Office**

**Office européen des brevets**

(11) Publication number : **0 470 185 B1**

(12) # EUROPEAN PATENT SPECIFICATION

(45) Date of publication of patent specification :
29.11.95 Bulletin 95/48

(51) Int. Cl.⁶ : **H04B 1/50, H04L 5/14**

(21) Application number : **90907855.2**

(22) Date of filing : **26.04.90**

(86) International application number :
**PCT/US90/02291**

(87) International publication number :
**WO 90/13950 15.11.90 Gazette 90/26**

(54) **POWER-LINE COMMUNICATION APPARATUS.**

(30) Priority : **28.04.89 US 344907**
**30.10.89 US 429208**

(43) Date of publication of application :
**12.02.92 Bulletin 92/07**

(45) Publication of the grant of the patent :
**29.11.95 Bulletin 95/48**

(84) Designated Contracting States :
**AT CH DE ES FR GB IT LI SE**

(56) References cited :
**EP-A- 0 115 814**
**EP-A- 0 156 557**
**US-A- 4 058 678**
**US-A- 4 885 563**
**PATENT ABSTRACTS OF JAPAN vol. 10, no.**
**283 (E-440)(2339) 26 September 1986**

(73) Proprietor : **ABRAHAM, Karoly Charles**
**8101 Midnight Pass Road**
**Sarasota, FL 34242-2723 (US)**

(72) Inventor : **ABRAHAM, Karoly Charles**
**8101 Midnight Pass Road**
**Sarasota, FL 34242-2723 (US)**

(74) Representative : **Sobisch, Peter, Dipl.-Ing. et al**
**Patentanwälte**
**Dipl.-Inge. Röse, Kosel & Sobisch,**
**Odastrasse 4a**
**D-37581 Bad Gandersheim (DE)**

# Description

## Related Application

This application is a continuation-in-part of U.S. Serial No. 429,208 filed October 30, 1989 which is itself a continuation-in-part of U.S. Serial No. 344,907, filed April 28, 1989.

## Background of the invention

### 1. Field of the Invention

The present invention is related generally to power system communications, and more particularly to apparatus capable of simultaneously transmitting and receiving digital data signals both at high rates and over long distances through power-lines and through power line transformers, including AC, DC and coaxial cables (including phone lines).

### 2. Statement of the Prior Art

"Power-line carriers" are well known in the field of power system communications. The principal elements of such power-line carriers are transmitting and receiving terminals, which include one or more line traps, one or more coupling capacitors, as well as tuning and coupling equipment. Detailed information regarding the description and typical composition of conventional power-line carriers may be found in Fundamentals Handbook of Electrical and Computer Engineering, Volume II: Communication, Control, Devices, and Systems, John Wiley & Sons, 1983, pp. 617-627. TK151.F86, the contents of which are incorporated herein by reference.

A power line communication system is generally known from EP-A-0 115 814 A1. This system is characterized by a signal transmitter cooperating with a three-phase power line by means of a circuit including a transformer unit and capacitors functioning as a coupler means.

A significant problem associated with such prior art power-line carriers is their requirement for one or more line traps, one or more coupling capacitors, one or more coupling transformers or one or more carrier frequency hybrid circuits and frequency connection cable. Furthermore, in traditional systems the modulation at the transmitter and receivers is not synchronized. Traditional systems experience distance limitations whenever AM or FM demodulation is used, and they pick up the 60 Hz signal and its harmonics from the power-linees. To the extent that the carrier frequency is received at all, it is often too weak to demodulate. Such systems further have a narrow bandwidth and experience no less than s 20dB loss at the carrier frequency.

One prior art method operates at a frequency of between between 20KHz and 400Khz where the attenuation of the power line is greater. However, the 60Hz harmonics are still picked up by such a system. Accordingly, there is still a need to use high power transmission because of noise and coupling losses of greater than 20dB. As a result, the signals must be transmitted over the power-lines at very high power outputs and low bandwidths.

Still other prior art methods operate below 20 KHz where the attenuation of the power-lines is lower. However, such systems experience a high level of noise and a very small bandwidth. These systems also experience at least a 20dB loss through the coupler.

All existing systems attempt to communicate between the harmonics rather than by reducing the noise significantly through the coupler. In addition, prior art systems are location dependent and are affected by their relative position with respect to transformers or other plugged in equipment. Frequently, prior art power line communication mechanisms must perform a frequency transponent in both the transmitter and receiver, thus requiring two or more quartz oscillators.

Finally, all previous power line communication systems are characterized by their incorporation of magnetic or ferrite (iron) core linear transformers for both transmission and reception in the duplexing system. Because these systems are magnetically coupled and the 60Hz current is greater than zero, they pass a significant amount of the 60Hz high power signal and its resulting harmonmics.

The use of magnetic transformers for transmission is itself a cause of several problems. First, magnetic transformers are affected by distribution transformers and devices incorporating magnetically coupled transformers. Magnetic transformers tend to pass back large.percentages of the 60Hz power-line currents which can damage the transmitter. The conventional response to this particular problem has been to increase the ratio of the primary to secondary windings to 10:1. While this results in a smaller "back" current passed to the transmitter, it consequently requires high power transmission of the carrier signal. Further, systems using magnetic transformers do not resonate with the coupling capacitors used with such systems. Thus, such systems frequently experience a 20 (decebel) dB power loss over their associated coupling capacitor.

The problems associated with the use of magnetic transformers in receivers are equally significant. The use of magnetic linear transforms require the use of filters which pass a narrow bandwidth. As a result, prior art systems are slow (maximum of 100 baud). The transformer further picks up the magnetic field for every frequency and accordingly picks up the 60Hz signal and its harmonics. This further exacerbates the need for filtering in the receiver. In addition, the impedance of the primary of the magnetic transformer will be effected by the secondary side of the transformer which will not allow good matching conditions to the power line. This can result in mistuning which can be further aggravated by other power line transformers.

Prior art power line communications systems are also typically loud and require expensive repeaters which require at least 600 watts of power for transmission.

Prior art methods of telephone line communication also use magnetically coupled transformers which have similar narrow bandwidths and noise problems. The impedances of such systems do not match the impedance of the phone line well.

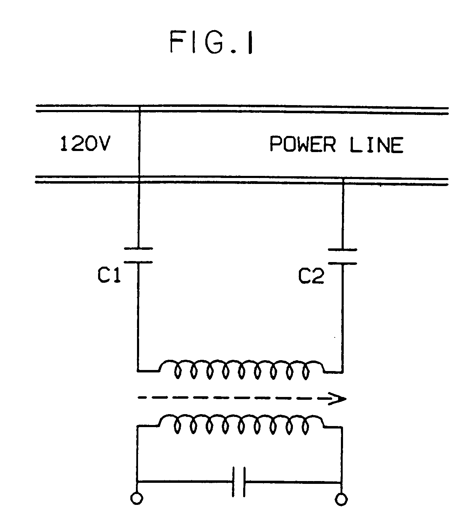

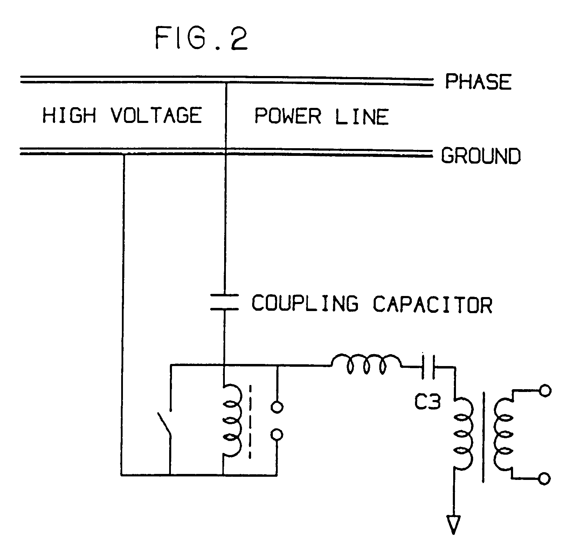

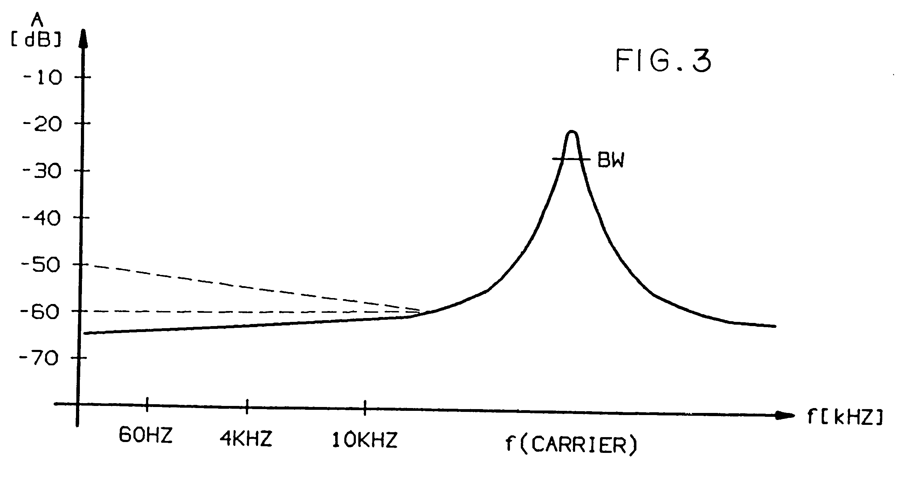

Figures 1-3 schematically illustrate the problems associated with prior art magnetic linear transformers as applied in power line communications systems. As can particularly be seen in Figure 3, such systems produce a narrow bandwidth and do not adequately attenuate the low frequency power signal and its harmonics.

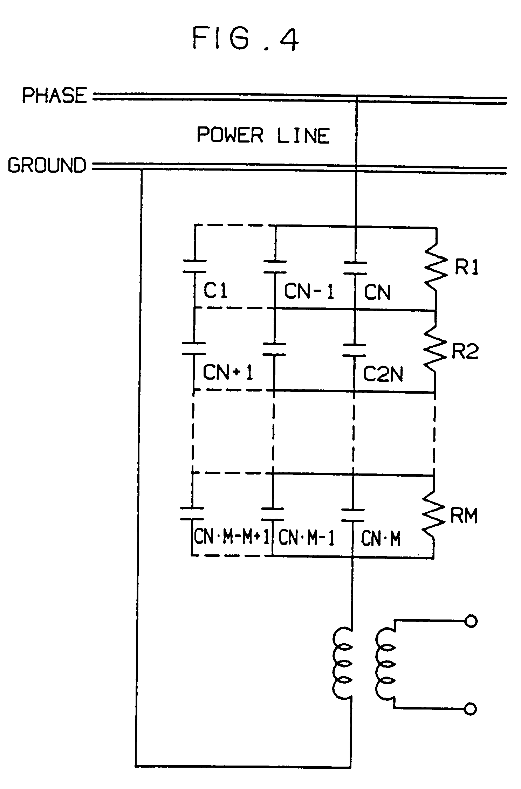

The present invention, characterized by Figure 4, is directed to solving the above-mentioned problems. The present invention incorporates non-linear capacitively coupled air coil transformers coupled with respective resonating capacitor networks which minimize the 60Hz power signal and its harmonics, and which thereby simultaneously maximize the carrier signal for better transmission and reception of carrier frequencies. The novel air coil transformers the present invention permit communication directly through power line transformers over long distances and at low power transmission. In contrast to magnetic transformers characteristic of prior art systems, the non-linear transformers of the present invention experience gain for reception and transmission, and from a systematic standpoint, function as part of the power line.

The non-linear transformers of the present invention are capacitively coupled and will only pick up the frequencies for which they are designed. Because system noise is generated by the harmonics of the 60Hz power line signal and because the nonlinear transformer passes none of the 60Hz signal, the majority of the harmonics are eliminated. The use of air coil transformers creates no impedance effect from the secondary side of the air coil and no impedance effect from other power line transformers. Consequently, impedance matching can be achieved using the resistivity of the primary air coil to the power line, which will be a function of part of the power line. The step-up or step-down aspects of power-line transformers are irrelevant using this coupling technique, because attenuation is equal in both directions. All of the above factors work to produce high speed power line communications over great distances.

The air coil transformers of the present invention permit high speed, high band power line communication at frequencies up to 1 MHz (with less than about a 200 KHZ bandwidth) for applications including LAN (local area networks) and phone line communications; communication at frequencies up to 160 KHz with about a 20 KHZ bandwidth for high distance, high voltage and LAN communications; and communication at frequencies up to 35 KHz (preferably 7-15KHz) with about a 6 KHz bandwidth for communication through any power line transformer. Finally, the novel air coil transformers of the present invention are equally applicable to any high voltage DC communications preferably up to 160 KHz.

In view of the above, it is an object of the present invention to provide a power line communications apparatus which utilizes novel non-linear transformers for both transmission and reception.

It is a further object of the present invention to provide power line communication apparatus utilizing novel air coil transformers which can be used for phone line, coaxial, LAN, power line and power line communication through power line transformers.

It is an additional object of the present invention to provide a power line communication apparatus in which the primary coil of the transformer resonates with an associated coupling capacitor network in order to maximize the transmission and reception voltages at the respective carrier frequencies. This resonation effectively creates a band pass filter at carrier frequency.

It is still a further object of the present invention to provide a communications apparatus in which a non-linear transmission transformer has primary and secondary windings in which the ratio of the windings is about 1:1.

It is still yet a further object of the present invention to provide a communications apparatus in which the receiver coupling contains a capacitor network which impedes the 60Hz high power signal and its harmonics.

It is still yet a further object of the present invention to provide a communications apparatus in which the receiving network includes a non-linear air coil transformer in which the ratio of the primary to secondary windings is about 1:1.

It is still yet a further object of the present invention to provide a communications apparatus in which the capacitor network for both transmission and reception include resistors which divide down the AC voltage evenly. The resistors also serve to protect the system against spiking and lightning.

It is still yet a further object of the present invention to provide a communications apparatus which can provide a high bandwidth for the transmission of communications signals at speeds greater than 9600 baud, and at speeds of up to 1200 baud directly through power line transformers.

It is yet a further object of the present invention to provide a communications apparatus containing a non-linear air coil transformer effectively comprising two single layer finite solenoids each having different diameters thus defining an air gap, which creates a small coupling capacitance between the solenoids.

It is still yet a further object of the present invention to provide apparatus for power system communications over long distances.

It is still yet an additional object of the present apparatus to provide power line communications in which the primary and secondary coils of the non-linear transformer have different diameters.

It is yet another object of the present invention to provide an apparatus for power line communications in which coupling capacitor resonates with the primary side of the non-linear transformer.

It is still a further object of the present invention to provide a novel non-linear air coil transformer coupled with a capacitor network for use in telephone line communications.

## Summary of the Invention

In accordance with the present invention, apparatus for power-line communications is disclosed according to claim 1.

In accordance with a major aspect of the present invention, air coils comprising primary and secondary air windings function (with resonating capacitor networks) as the non-linear transformer (high pass filter) which cut the 60Hz harmonics below 10KHz with at least 80dB attenuation. Because the air windings (which function as solenoids) create a small coupling capacitance through the air gap, the secondary windings, with the coupling capacitance, function as a high pass filter.

The communications apparatus of the present invention has numerous applications. The main applications are in electricity and gas meter readings, the switching of remote control devices, and data communications between computers over power-lines. By way of example, the present invention makes it possible to transmit electricity and gas meter readings over power-lines for large numbers of customers. Such readings can be transmitted at low power, at high data rates, over long distances and directly through power line transformers. In a hypothetical system, such readings could be made by a computer with addressable data using two frequencies from house (120/240/480 Volts), to the distribution line, and directly through the distribution transformer (13,800, 22,000, 69,000 voltage power-lines). In addition, public phone systems in trains and internal security systems in homes could be set up over high voltage power-lines using addressable data transmitted through the phone sytem.

The present invention can be further utilized to control large or small machines in factories and mines. The apparatus of the present invention has been used to transmit data between computers and printers at speeds in excess of 9600 baud. Other applications include data transmission through phone lines, coaxial lines and any high voltage DC power lines.

Other objects, advantages, and novel features of the present invention will become more apparent from the following detailed description thereof, when considered in conjunction with the accompanying drawings wherein:

## Brief Description of the Drawings

Figs. 1 and 2 schematically represent traditional duplexing couplers on both low and high voltage power lines.

Fig. 3 illustrates the frequency characteristics of traditional serial LC couplers.

Fig. 4 schematically represents the LC coupler of the present invention.

Fig. 5 illustrates the frequency characteristics of the LC coupler of the present invention.

Fig. 6 is a block diagram of a power-line communication apparatus in accordance with the present invention;

Fig. 6A is a block diagram of a power-line communication apparatus in accordance with the present invention including power-line transformers;

Fig. 7 is a schematic diagram of first coupling means in accordance with the present invention, which corresponds to the coupling TA-RB shown in Figs. 6 and 6A;

Fig. 8 is a schematic diagram of second coupling means in accordance with the present invention, which corresponds to the coupling TB-RA shown in Figs. 6 and 6A;

Figs. 9A and 9B illustrate the non-linear transformer air coils utilized in the present invention.

Fig. 9C illustrates a half duplexing coupler in accordance with the present invention for data communications through distribution transformers.

Fig. 10A is a schematic diagram corresponding to the modulator FA/demodulator FB shown in Figure 6.

Fig. 10B is a schematic diagram of an alternative modulator FA/demodulator FB for the system in Fig. 6.

Fig. 10C is an FSK decoder phase lock loop which can function as the modulator/demodulator circuit of Fig. 6;

Fig. 10D is the primary phase lock loop of Fig. 10A;

Fig. 11 is a schematic diagram of a transmitter means used in the present invention;

Fig. 12 is a schematic diagram of receiver means used in conjunction with the transmitter means shown in Fig. 11, in the power-line communication of data signals over long distances.

Fig. 12A is a schematic diagram of a reciver which can be used for high speed communications.

Fig. 13 is a schematic representation of a coupling for the power line from phase to ground.

Fig. 14 is a schematic representation of a three phase coupling to the powerline, three phases to ground.

Fig. 15 illustrates a two phase coupling connection-to the power line, phase to phase.

Fig. 16 shown a three phase transformer coupling of the type predominantly used in Europe.

Fig. 17 shows a one phase transformer coupling of the type generally used in the United States.

Fig. 18 shows a spread spectrum transmitter/receiver in accordance with the present invention which is particularly applicable for communication in between noise.

Fig. 19 Bi-Polar Shift Keying transmitter/receiver which can be utilized with the present invention.

Fig. 20 is an equivalent circuit of the upper and underground power line with the power line impedances.

Fig. 21 is a graph of power line attenuation versus carrier frequency on the 35 KVAC power line for a 20 KM distance.

Fig. 22 is an illustration of an electric meter reading system incorporating the communication system of the present invention which may be implement by a utility.

Fig. 22A is a block diagram illustrating the use of the couplers of the present invention within a LAN linked by power lines or conventional phone lines.

Fig. 23 is a block diagram of the system of Figure 22 as applied to a multiplicity of substations.

Fig. 24 is a simplified block diagram of the system of Fig. 22.

Fig. 25 is a block diagram of a power line communication system.

Detailed Description of the Invention

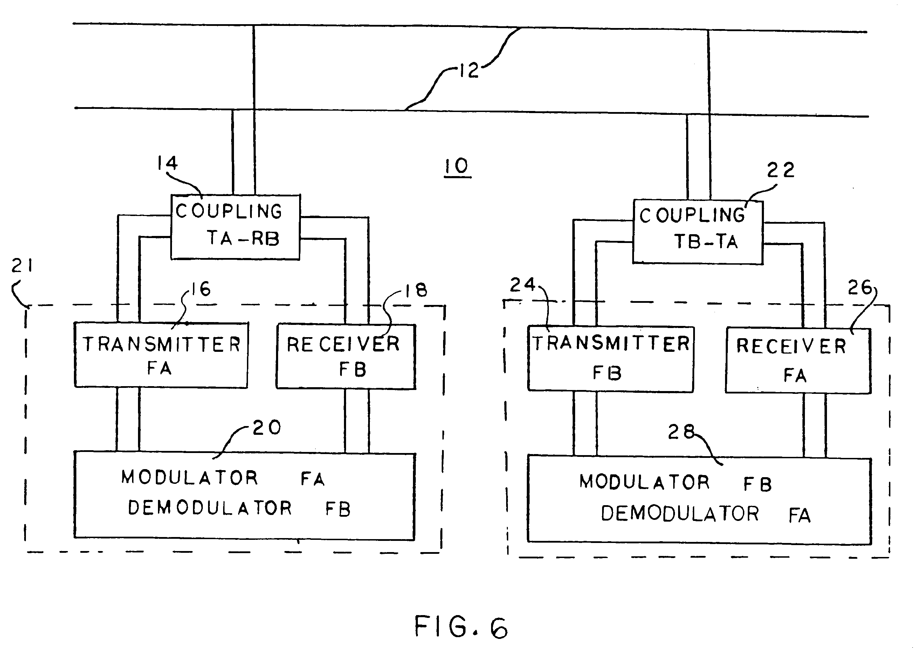

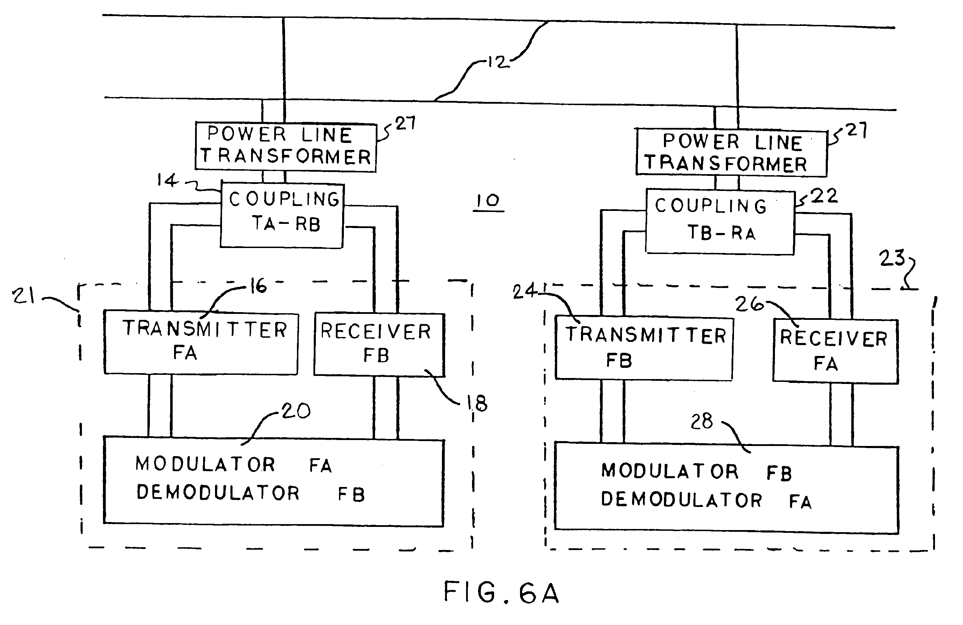

Referring now to the Figures, wherein like numbers designate like or corresponding parts throughout each of the several views, there is shown in Figs. 6 and 6A block diagrams of a power-line communication apparatus 10 according to the present invention for use in low power applications (up to 480 VAC).

The communications apparatus 10 shown is coupled to a pair of power-lines 12, and generally comprises first coupling means 14, first transmitter means 16, first receiver means 18, and first modulator/demodulator means 20 at a first location along the power-lines 12. The combination of transmitter means 16, receiver means 18 and modulator/demodulator means 20 comprise a first modem means 21. At a second location along power-line 12 are second coupling means 22, second transmitter means 24, second receiver means 26, and second modulator-demodulator means 28. The combination of transmitter means 24, receiver means 26 and modulator/demodulator means 28 comprise a second modem means 23.

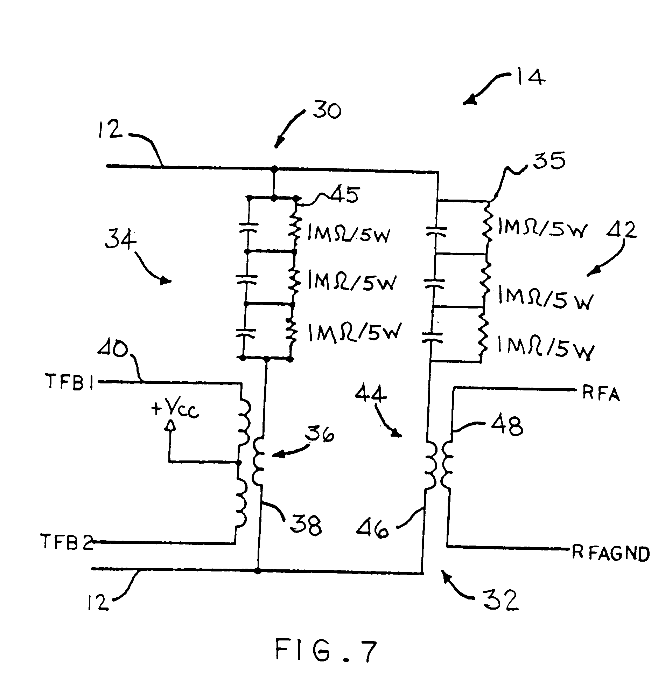

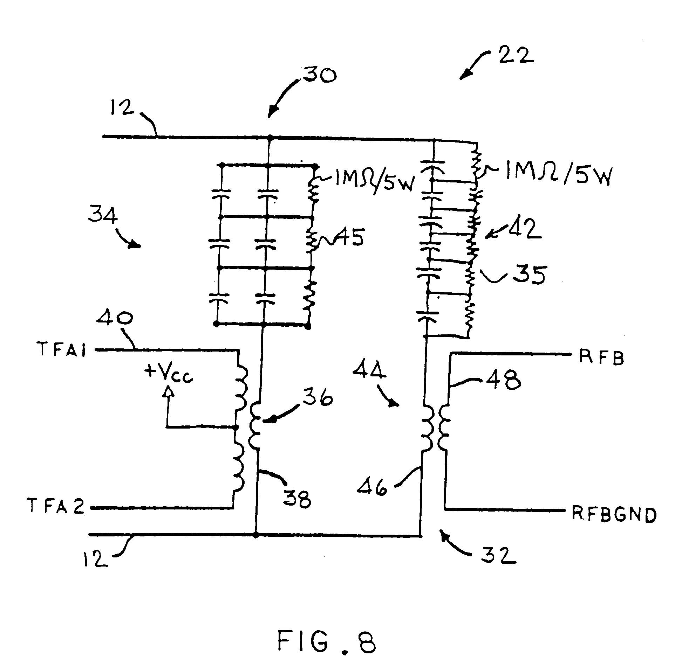

As will be explained in greater detail herein below, both coupling means 14, 22 include a pair of serial LC circuits (Figs. 7 and 8) which are coupled to the pair of power-lines 12. Referring to Fig. 6A, the apparatus is coupled to power-line transformers 27. Each of the serial LC circuits in a respective one of the coupling means 14, 22 resonate at a given frequency. The LC circuits include a plurality of capacitors which are connected in a series and parallel configuration. See Figure 4. The coupling means 14, 22 further incorporates novel non-linear aircoil transformers for both transmission and reception which serve as the inductive (L) component of the respective LC circuits. It is to be noted that while the present invention is being described in the context of two identical communications apparatus, either circuit may be configured to function as a simple receiver or transmitter.

The first transmitter means 16, coupled to the first coupling means 14, is capable of transmitting digital data signals carried by a first carrier frequency FA across the pair of power-lines 12, and as shown in Fig. 6A, through power line transformers. The first receiver means 18, coupled to the first coupling means 14, is capable of receiving digital data signals carried by a second carrier frequency FB from the pair of power-lines 12. The modulator/demodulator means 20, coupled between the first transmitter means 16 and the first receiver means 18, modulates the digital data signals to be carried by the first carrier frequency FA, and demodulates the digital data signals carried by the second carrier frequency FB.

In a similar manner, at the second location along the power-lines 12, the second transmitter means 24 is coupled to the second coupling means 22. Second transmitter means 24 is capable of transmitting the digital data signals to be carried by the second carrier frequency FB across the pair of power-lines 12, and as shown in Fig. 6A, through power-line transformers. Accordingly, the second receiver means 26 is coupled to said second coupling means 22, and is capable of receiving the digital data signals carried by the first carrier frequency FA from the pair of power-lines 12. The second modulator/demodulator 28, coupled between the second transmitter means 24 and the second receiver means 26, modulates the digital data signals to be carried by the second carrier frequency FB and demodulates the digital data signals carried by the first carrier frequency FA.

The first and second carrier frequencies FA, FB preferably comprise frequencies up to 1MHz (megahertz), at a power level of about 20 decibels above any other frequencies. The bandwidth of each of the coupling means 14, 22 preferably comprises less than 30 kilohertz. For most high voltage, long distance communications, the first and second carrier frequencies FA, FB will typically comprise frequencies that are less than about 160 KHz, having bandwidths of less than 20 KHz. When used for communication through power line transformers, FA and FB will typically comprise frequencies below 35 KHz (preferably 7-15 KHz) with bandwidths of about 6 KHz. The serial LC circuits (Figs. 7 and 8) of both coupling means 14, 22 each comprise impedance matching means which will be described in greater detail below.

With reference next to Figs. 7 and 8, the specific circuitry for representative coupling means 14, 22 is now described in greater detail. The coupling means 14 (Fig. 7), 22 (Fig. 8) each include a pair of serial LC circuits 30, 32 which resonate at the carrier frequencies FA, FB. It will be appreciated by those skilled in the art that for FSK (Frequency Shift Key) applications FA will correspond to $F_1$ and $F_2$ and FB will correspond to $F_3$ and $F_4$. The serial LC circuit 30 shown in Fig. 7 resonates at the second carrier frequency FB, while serial LC circuit 32 resonates at the first carrier frequency FA. Similarly, the serial LC circuit 30 of Fig. 8 resonates-at the first carrier frequency FA, and serial LC circuit 32 resonates at the second carrier frequency FB.

The LC circuits include respective serially and parallely connected capacitor networks 34, 42. To each capacitor in series is connected a resistor 35, 45 which evenly divides down the AC voltage. Preferably, the resistor values should be rated at 1 Megaohm per 5 watts and the capacitors should be 200 VAC capacitors. The resistors should preferably be thick film (i.e. carbonless). The Q point of the capacitors should similarly be high. In operation, the couplers (LC) should be placed into a resin for good insulation when used with operating voltages up to to 22 KV. At operating voltages above 22 KV, the capacitors should be separately placed in an oil filled insulator and the air coil transformer placed into a resin. The use of the resistors 35, 45 serve to minimize the DC current so as to prevent spiking and afford lightning protection.

It is to be appreciated that the capacitor networks 34, 42 create equivalent capacitances $C_{(eq1)}$ and $C_{(eq2)}$ for transmission and reception, respectively. The capacitor networks are connected to non-linear air coil transformers to be discussed below which function as the inductive element (L) of the LC circuit. $C_{(eq1)}$ and $C_{(eq2)}$ resonate with the primary windings of the non-linear transformers.

The air coil means comprise a first air coil 36 which includes a primary winding 38 and a smaller secondary, winding 40 situated coaxially within the primary winding. The second serial LC circuit 32 includes second air coil 44 including a primary winding 46 and smaller secondary winding 48 situated coaxially within the primary winding.

The first plurality of capacitors 34 are connected together in parallel between one of the power-lines 12 and the primary winding 38 of the first air coil 36. The primary winding 38 of the first air coil 36 is thereafter serially connected to the other power-line 12. The secondary winding 40 of the first air coil 36 is connected to its respective transmitter means 16. The second plurality of capacitors 42 are serially connected together between one of power-lines 12 and the primary winding 46 of the second air coil 44. The primary winding 46 of the second air coil 44 thereafter being serially connected to the other power-line 12. As noted above resistors, 35 and 45 function to evenly divide the voltage and serve to minimize spiking and afford lightning protection.

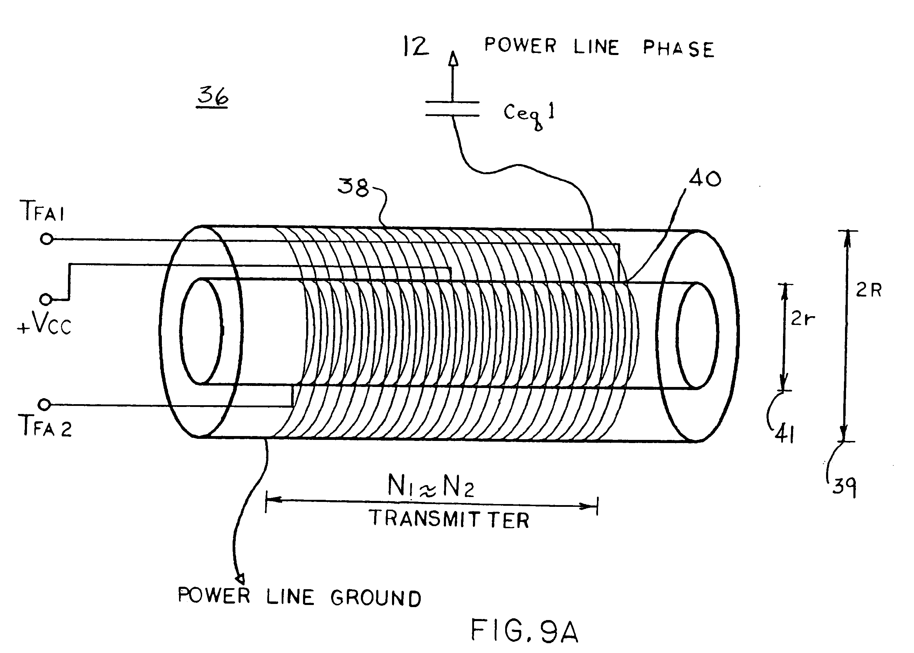

Referring to Figs. 9A-9C, the non-linear air coil transformers used in the present invention are described in greater detail. The novel air coil structures function as respective non-linear capacitively coupled air coil transformers for both transmission and reception. Figure 9A illustrates the transmitter transformer 36 with coupling capacitor network $C_{eq1}$. As shown in Fig. 9A, the transmitter transformer 36 is connected in series with $C_{eq1}$ and the power line 12. The transformer is non-linear and comprises a primary winding 38 and coaxial smaller secondary winding 40 which is placed between the primary winding. The primary winding 38 has a winding diameter 2R 39 which is greater than the diameter of the secondary winding 2r 41 and accordingly creates an air gap between the two. Of particular significance is the fact that both the primary and secondary windings 38, 40 in the transmitter air coils have the same numbers of turns (designated by $N_1 = N_2$), and are thus at a 1:1 ratio. Accordingly, the transmitter doesn't require a high transmission voltage, as is characterized by prior art devices. The primary coil resonates with $C_{eq1}$, thereby achieving a gain on the secondary side. Further $C_{eq1}$ is set to resonate with the primary winding at the carrier frequency FA, thus creating a band pass filter at the carrier frequency FA. This maximizes the current at the carrier frequency FA.

The values of $C_{eq1}$ and the resistors 35, 45 are set to generate a large voltage loss at frequencies less that 10KHz (thus encompassing the 60Hz power line signal). Thus, the significantly reduced 60Hz signal cannot generate a large enough current to pass the created small capacitance. That is, for transmission, the resistivity of the primary coil is roughly equal to the input impedance of the power line.

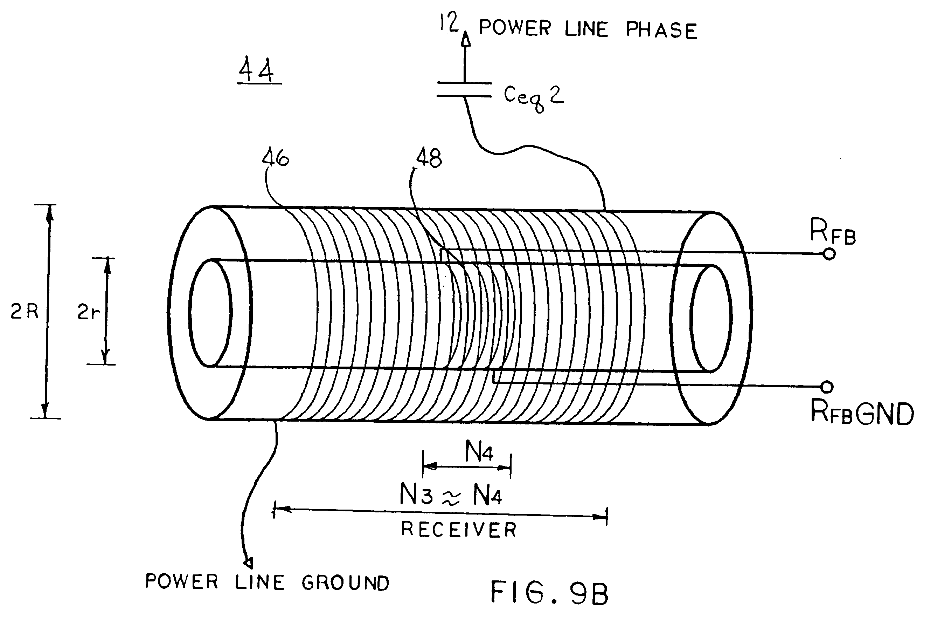

The receiver transformer is now described with respect to Fig. 9B. The receiver is connected to the power line 12 via $C_{eq2}$. As with the transmitter of Figure 9A, the receiver air coil comprises a non-linear transformer having a primary winding 46 with a first diameter 2R 47 and a secondary coaxial winding 48 having a second diameter 2r 49. Accordingly, an air gap, and thus a coupling capacitance, is similarly created between the respective primary and secondary windings 46, 48. In the receiver transformer, the ratio of the primary and secondary windings must be greater than or equal to 1:1, at carrier frequencies below 1MHz and may be below 1:1 at carrier frequencies greater than 1MHz. While this ratio can be altered or modified, such a change requires a resultant alteration in the size of the air gap, i.e. the relative ratio of 2R and 2r. The capacitor network $C_{(eq2)}$ is set to resonate with the primary winding at carrier frequency FB, thus creating a band pass filter at carrier frequency FB.

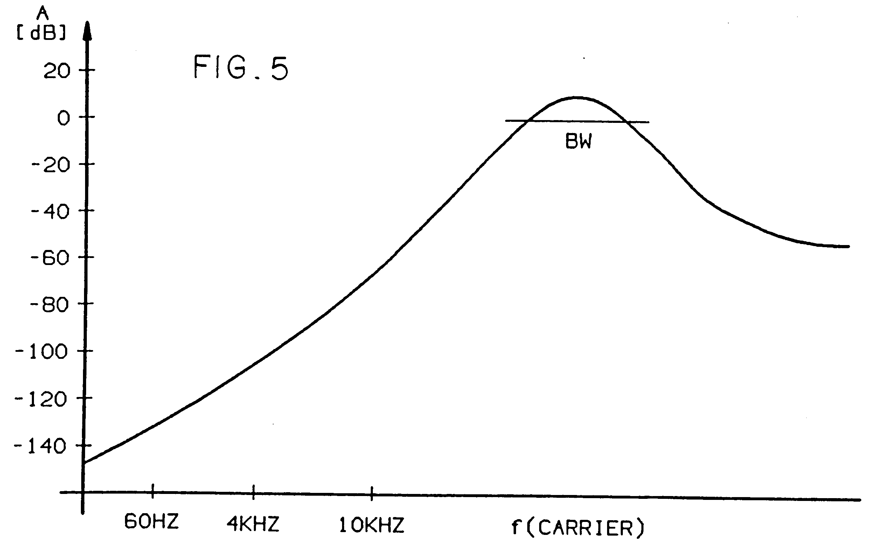

In operation, the power line voltage is significantly reduced by $C_{eq2}$ and the resistors. Thus, the created capacitance with the secondary winding significantly attenuates the harmonics and 60Hz signal to about zero, thus effectively functioning as a high pass filter. The carrier frequency voltage is thereby maximized. The air coil produces a signal having a wider bandwidth than previous systems. The bandwidth characteristics of the present invention are shown in Figure 5. For reception, the resistivity of the primary should be greater than the impedance of the power line.

From a design standpoint, then, the philosophy is to minimize the 60Hz line voltage and its harmonics. The circuit can be thought of as a series CRL circuit on the transmission side where: for the primary;

$$V_{PRIMARY(60Hz)} = V_{power - line} (Zl)/(Zc)$$

and for the secondary;

$f^2(carrier)/f^2(60Hz)$, determines the $V_{carrier}/V60Hz$ frequency characteristic ratio which will always be around 100dB or greater. Preferably, a higher carrier frequency should be used for higher power line voltages. On the receiver side, the ratio of the impedances of inductance to capacitance, i.e. ZL/ZC must be minimized. Thus, ZC should be maximized at 60Hz. Consequently, because $I_{60Hz} = VPL/ZC$, ZC should be maximized at 60Hz.

The above relationships coupled with the non-linearity of the transformers (i.e. the existence of the air gap) serve to completely filter the 60Hz current and its harmonics below 10KHz. The above makes it possible to communicate directly through power line transformers. It is to be appreciated by those skilled in the art that the noise component of the 60Hz signal is concentrated below 10KHz. Because system noise is generated by the harmonics of the 60Hz power line signal and because the nonlinear transformer passes none of the 60Hz signal, the majority of the harmonics are eliminated. The use of air coil transformers creates no impedance effect from the secondary side of the air coil and no impedance effect from other power line transformers. Consequently, impedance matching can be achieved using the resistivity of the primary air coil to the power line, which will be a function of part of the power line. The step-up or step-down aspects of power-line transformers are irrelevant using this coupling technique, because attenuation is equal in both directions.

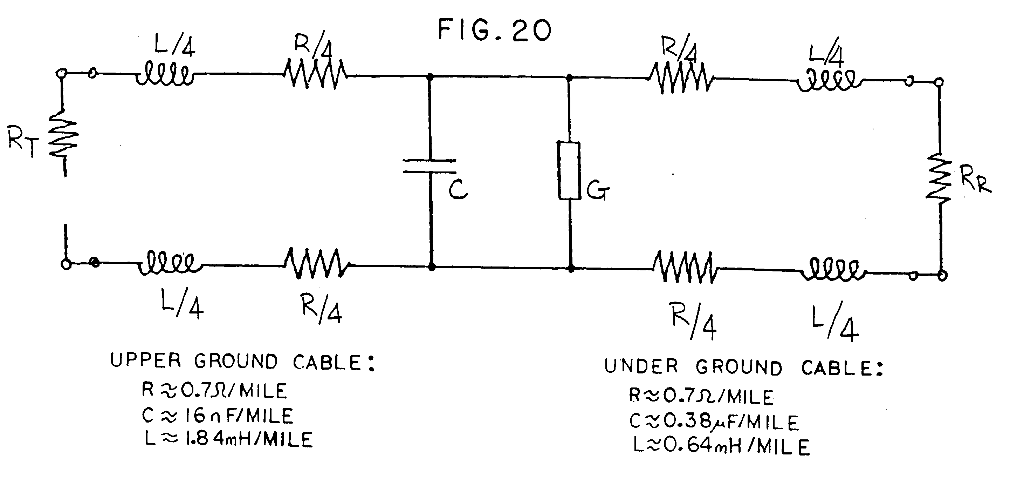

The theoretical operation of the circuit is seen with reference to Fig. 20, an equivalent circuit of the upper and underground power line, which also shows the LRC values required to match the coupler to the power line. At primary resonation, the LC impedances will be zero at transmission and reception such that the resistivity of the primary coil RT matches the input impedance of the power-line. On the receiver side, RR, has to be larger than the input impedance of the power line. These relationships facilitate long distance communication.

The coupling means 14, 22 shown in Figs. 6, 7, 8, 9A and 9B are suitable for communication in association with wide range of power-line voltages. As will be discussed herein, they can be utilized for high voltage, low voltage, LAN and phone line communications, as well as for communication directly through power line transformers.

A. Communication Options

1. Computer communication through Power and Phone Lines

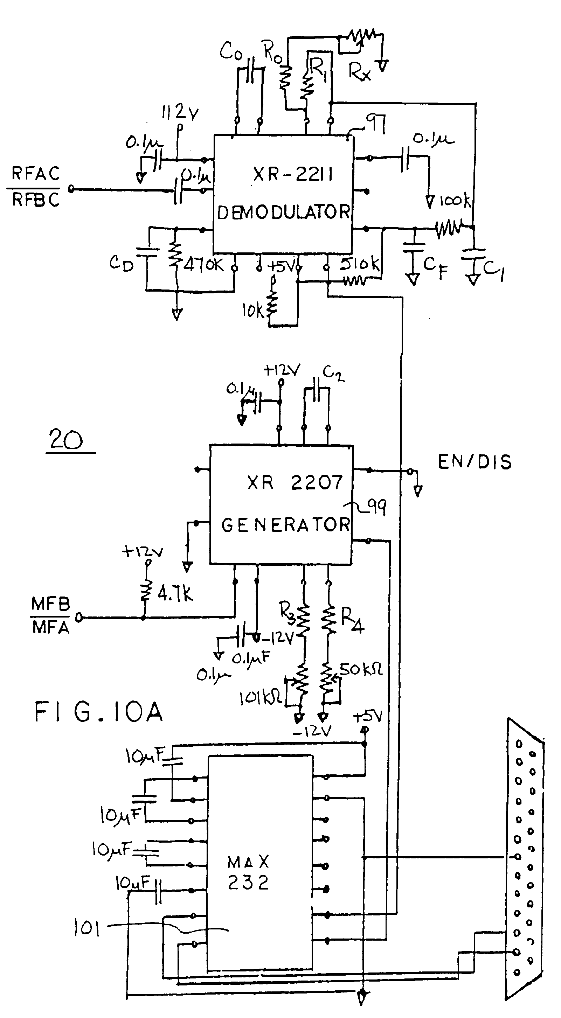

The couplers of the present invention can be applied to LAN (local area network) and phone line communications and facilitate communication speeds up to 10 Kilobaud. For this application, the coupling means 14 preferably use a first carrier frequency FA of around 75 KHz (and 81.5 KHz for FSK) and a second carrier frequency FB of around 111 KHz (and 117.5 KHz for FSK) over power-lines 12 of up to about 1KVAC. The coupler preferably uses first and second pluralities of capacitors 34, 42 as shown therein, each capacitor having a 1.6KV working voltage and a capacitance of 100 nanofarads. The first air coil 36 should have a primary winding 38 with a coil diameter of 2.2cm, #26 gauge magnet wire secondary winding 40 with a coil diameter of about 1.6 cm, #34 gauge magnet wire. The second air coil 44 should have a primary winding 46 of 2.2 cm, #34 gauge magnet wire and a secondary winding 48 with a coil diameter of about 1.6 cm, #30 magnet gauge wire. The system utilizes the modems shown in Figures 10A, 11 and 12A.

On the other side of the system, coupling means 22 comprises first and second pluralities of capacitors 34, 42 as shown therein, each capacitor having a 1.6KV working voltage and a capacitance of 100 nanofarads, along with the non-linear air coil transformer. As above, the first air coil 36 should have a primary winding 38 with a coil diameter of 2.2 cm, #26 gauge magnet wire and a secondary winding 40 with a coil diameter of 1.6 cm, #34 gauge magnet wire. The second air coil 44 should similarly have a primary winding 46 of about 2.2 cm, #34 gauge magnet wire and a secondary winding 48 with a coil diameter of about 1.6 cm of #30 gauge magnet wire.

## 2. High Voltage Power Line Communications

The couplers are also applicable to high voltage power line communication applications in which a 15 KVDC/4.5KVAC capacitor can be used for power-line voltages of up to 750KV. The couplers of the present invention can be utilized for communication speeds up to 9600 baud. In this application first FA and second FB carrier frequencies of 80 KHz and 120 KHz, respectively, are preferred, and the connections of first 34 and second 42 pluralities of capacitors are somewhat modified over what is shown in Figs. 7 and 8. The first plurality 34 suitably comprises two parallel branches of three hundred 100 nanofarad capacitors and connected in series, while the second plurality 42 suitably comprises one branch of three hundred 100 nanofarad capacitors connected in series, with 5 MegaOhm per 5 watt resistors. It is to be appreciated that the above system will be comparatively large, having a height of approximately fifteen feet and will typically be located at a ground station adjacent to large high voltage transmission lines.

Referring to the non-linear transformers for this application, the first air coil 36 of the coupling means 14 suitably comprises a primary winding 38 with a coil diameter of 10 cm, #20 gauge magnet wire, and a two-part secondary winding 40 with a coil diameter of 6.0 cm of #26 gauge magnet wire. The second air coil 44 likewise suitably comprises a primary winding 46 of 10 cm, #20 gauge magnet wire, and a secondary winding 48 with a coil diameter of 6.0 cm, #26 gauge magnet wire. The inductivity of the primary is calculated according to the equation $L = 1/4^2 f^2 C_{eq}$.

The identical coupling means 22 under the same circumstances also includes the capacitor pluralities 34, 42 comprising a number of branches of 300 serially connected capacitors, all of the branches of each plurality 34, 42 being connected in parallel. The first plurality 34 suitably comprises one branch of three hundred 100 nanofarad capacitors connected in series, while the second plurality 42 suitably comprises two branches of three hundred 100 nanofarad capacitors connected in series. The first air coil 36 comprises a primary winding 38 with a coil diameter of 10 cm, #20 gauge magnet wire and a secondary winding 40 with a coil diameter of 6.0 cm, #26 gauge magnet wire. The second air coil 44 likewise suitably comprises a primary winding 46 of 10.0 cm, #20 gauge magnet wire and a secondary winding 48 with a coil diameter of about 6.0 cm, #26 gauge magnet wire.

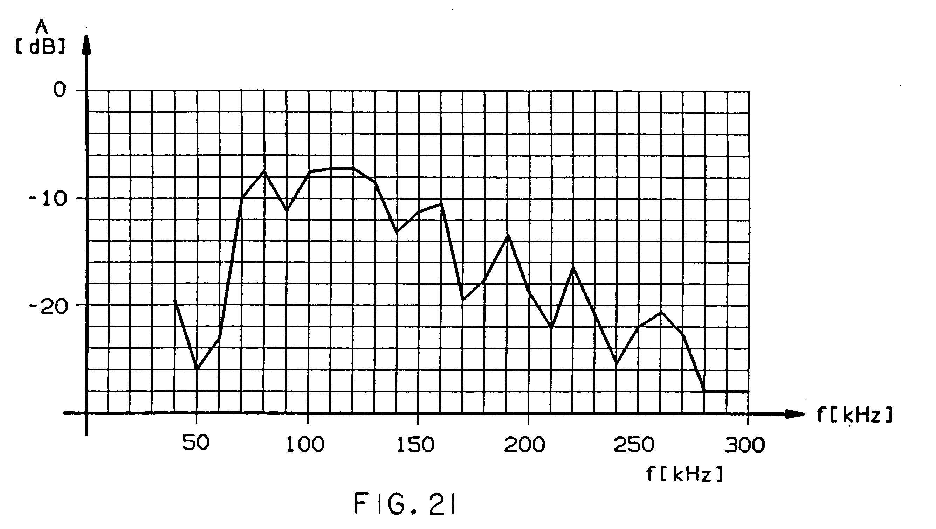

Figure 21 is a graph of power-line attenuation versus carrier frequencies on the 35 KVAC power line for 20 KM distances. A 150 ohm load was used for the matching conditions. The best range of communication can be seen here from 70 to 160 KHZ. As the number of transformers in the power line increase, the attenuation of the power line will increase especially above 100 KHz.

## 3. Communication Through Power Line Transformers

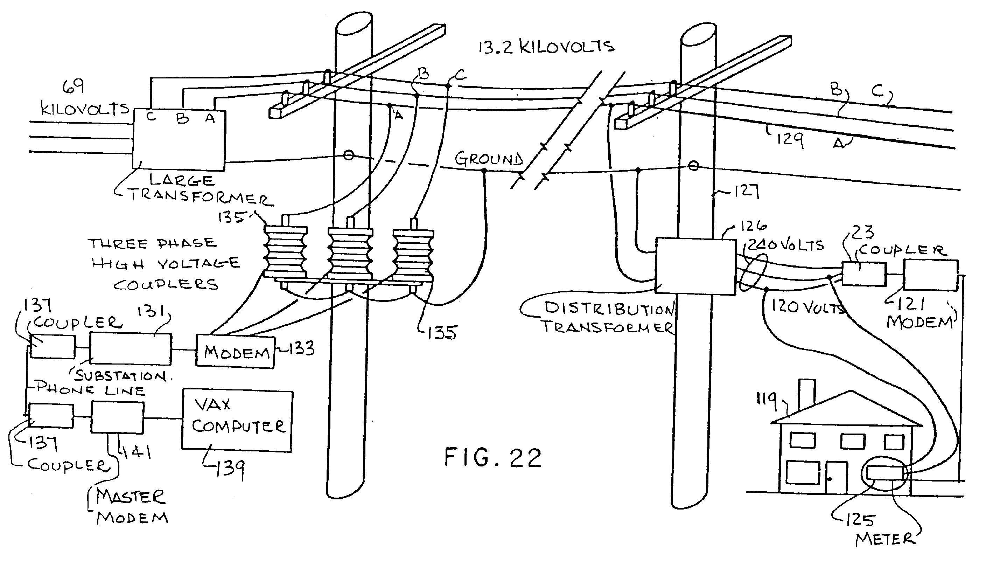

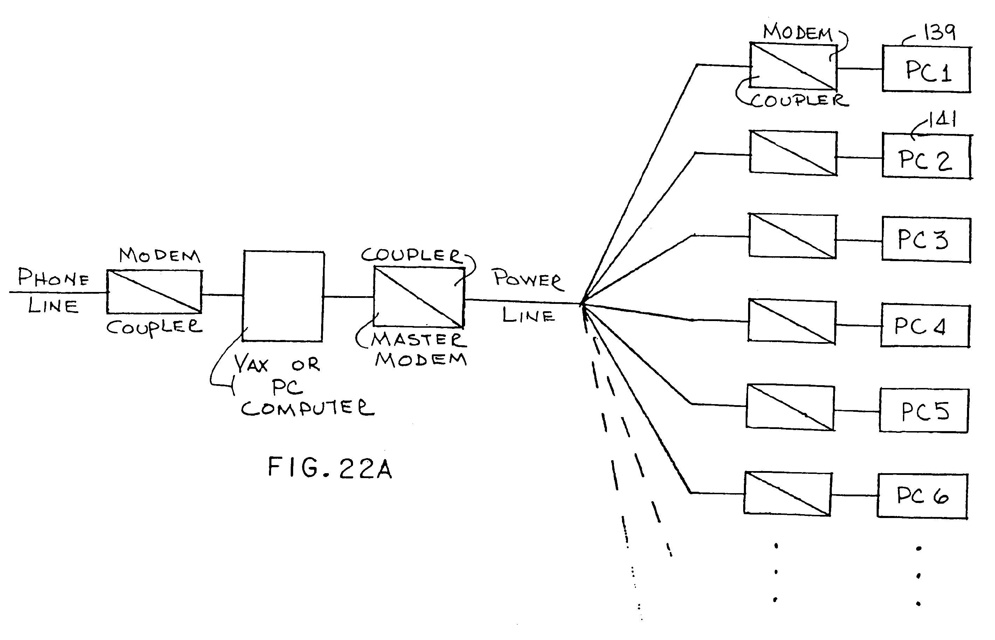

As noted above, the communication apparatus of the present invention may also be utilized for communication through power-line transformers (See Figure 22). The couplers permit communication through transformers at communication speeds of up to 1200 baud. It is to be appreciated that for communication through the transformer in FSK, BPSK or Spread Spectrum using half-duplex with $F_1 = 12.1$ KHz $F_2 = 12.9$ KHz, using five serial and 100 nanofarad (4.5KVAC) capacitors with 6 Megaohm/5 Watts resistors (up to 22 KV power-line), the bandwidth of the couples will cover the $F_1$ and $F_2$ frequencies.

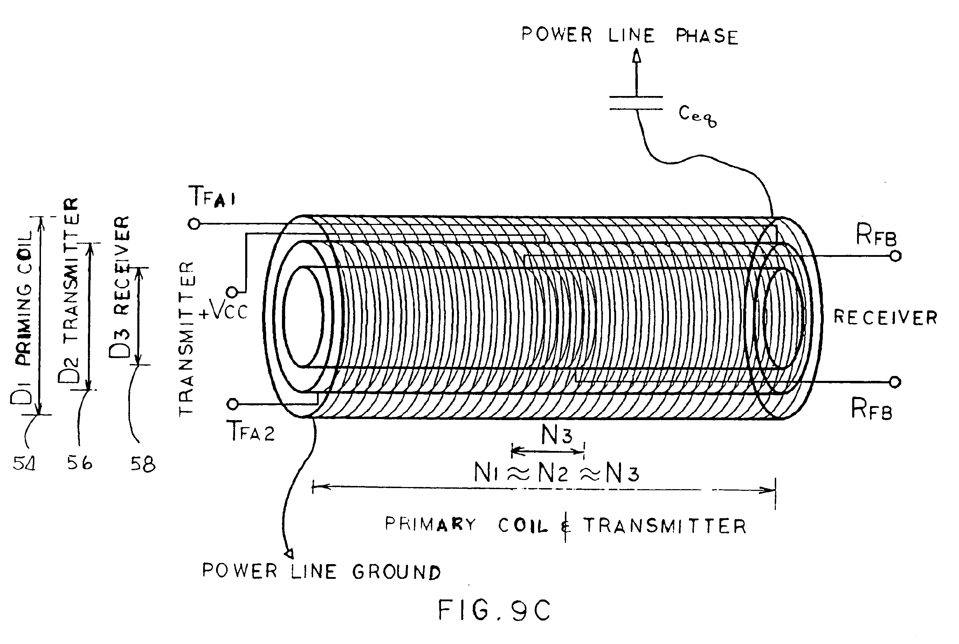

Fig. 9C illustrates a half-duplex coupler for data communication through the high voltage side of distribution transformers. In this system three solenoids (aircoils) having three different diameters are utilized. The diameter of outer coil 54 is 11.4 cm, #26 gauge magnet wires, the middle 56 is 8.9 cm, #26 gauge magnet wire and the smallest 58 is 8.0 cm, #30 gauge magnet wire. The largest diameter outer coil 54 is the primary which resonates with the capacitor, the middle is the transmitter coil 56 and the narrowest is the receiver coil 58. For reception, the transmitter coil must be uncoupled. In order to have transmission, the receiver coil is uncoupled. In this configuration, noise below 10KHz is reduced significantly, and the carrier frequency through the couplers has a gain.

On the low power side of the power line distribution transformer corresponding to the 120, 240 and 480 V power lines, the system can be configured to use the same carrier frequency, with one coupler on the low voltage side (i.e. a single primary and single secondary). (See Figure 22). The transformer is coupled to two 250 nanofarad capacitors (500 VAC). In this situation, the primary coil 38 has a diameter of 4.0 cm using #26 gauge magnet wire with the secondary coil 40 having a diameter of 3.8 cm using #34 gauge magnet wire.

It is to be appreciated that the couplers of the present invention will permit more than one carrier signed to be simultaneously transmitted.

## B. Transmitter and Receiver Devices

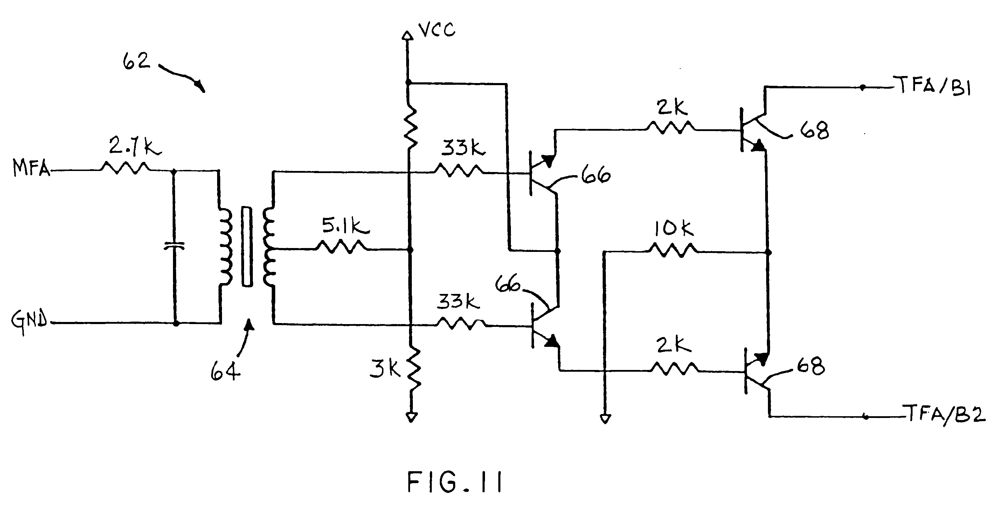

The preferred transmitter 16, 24 useful in the power-line communication of data signals over long distances is shown in Fig. 11. This transmitter can be utilized in all of the applications of the present invention, including transmission through power line transformers. The transmitter means generally comprises a driver 62 which is connected to the coupling means 14, 22 by way of their respective connections TFA/B1, TFA/B2. Because of its use of a magnetic coil 64 and transistors 66, 68, the transmitter 16 while comparatively slow, is more powerful for long distance (i.e., 10 miles) power system communication, especially over high voltage power lines. Suitable transistors 66 for this transmitter are conventional SK3444, while the transistors 68 may suitably comprise conventional SK3024. For higher power transmission, 2N3055 transistors may be utilized instead of SK3024. The particular value of each resistor and capacitor shown in Fig. 11 will depend upon the specific operating characteristics of the driver but they would be readily ascertainable without undue experimentation by one of ordinary skill in the art of electronics. Nevertheless, exemplary values of the resistors and capacitors are shown in Fig. 11.

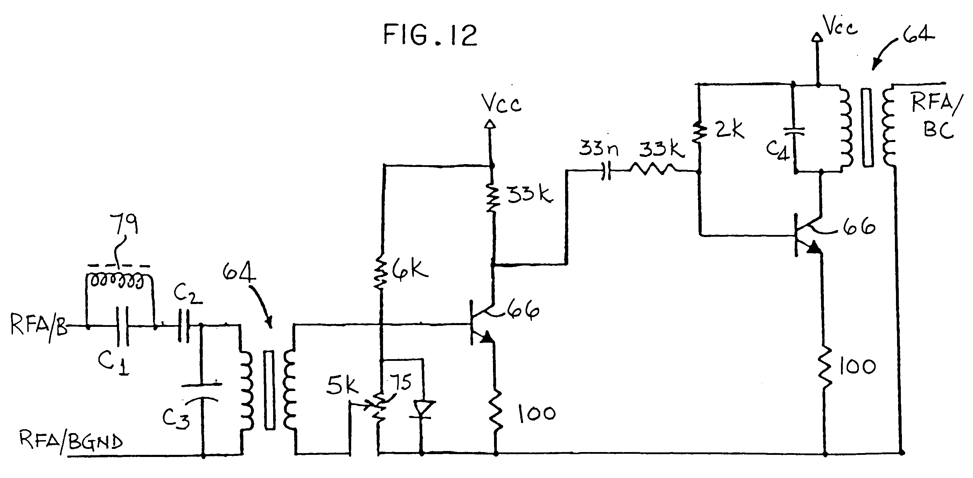

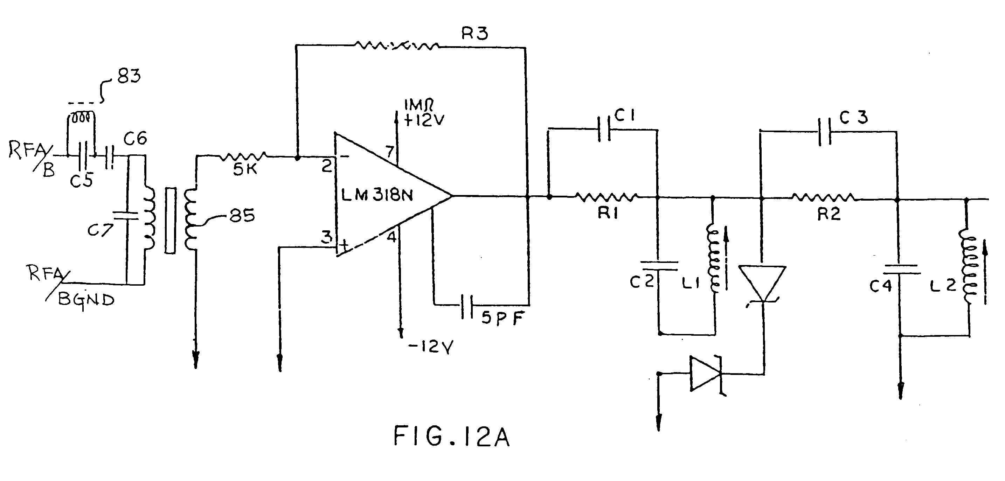

The preferred receiver means 18, 26 which is useful in the power-line communications of data signals over long distances is shown in Fig. 12. The receiver means 18, 26 is similarly connected to the coupling means 14, 22 by way of their respective connections RFA/B, RFA/BGND and RFA/BC. It will be readily apparent that the receiver means 18, 26 is more powerful for long distance (i.e., 10 miles) power system communication, especially over high voltage power lines. Suitable transistors 66 are also conventional SK3444. The particular value for each resistor and capacitor shown in Fig. 12 would depend upon specific operating characteristics of the receiver 18, but they would be readily ascertainable without undue experimentation by one of ordinary skill in the art of electronics. Nevertheless, exemplary values of the resistors and capacitors are shown in Fig. 12. A key feature of the receiver of Figure 12 is the inclusion of potentiometer 75 which biases out noise around the signal wave. Another feature is the notch filter 79 coupled to magnetic coil 64 (band pass filter) which filters out transmission frequencies on the same side.

Figure 12A shows an additional receiver 18', 26' which can be utilized between 120V and 240V including FSK, and which is particularly suited for low voltage LAN and telephone line communications. In this receiver, $C_1$ and $R_1$ are used for F1; and $C_3$ and $R_2$ are used for F2 in a high pass configuration. In a low pass configuration, $C_2$ and $L_1$ are used for F1 and $C_4$ and $L_2$ are used for F2. The receiver further utilizes a notch filter 83 coupled to band pass filter 85 which filters out transmission frequencies.

## C. Modulator/Demodulator Circuits

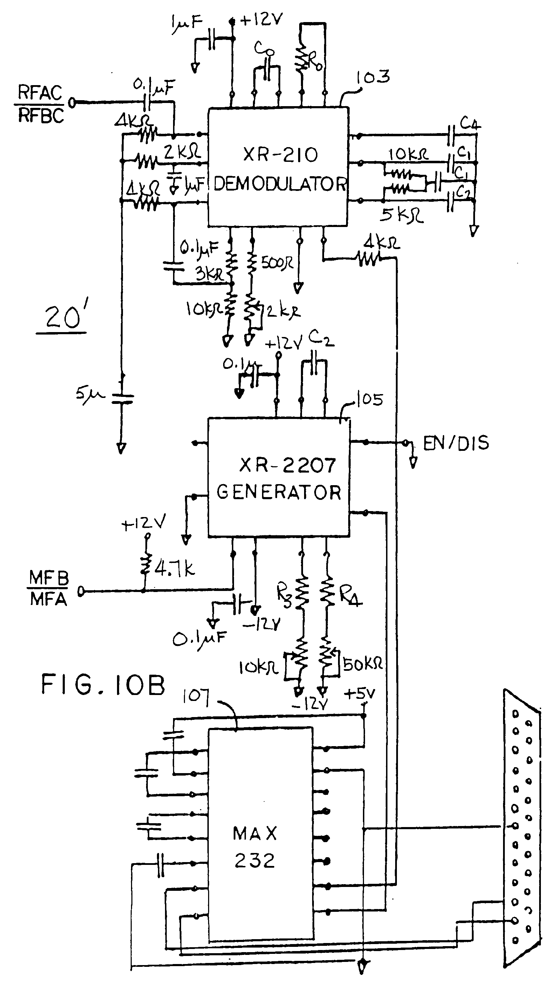

The modulation and demoludation of the data signals is now described with reference to Figures 10A and 10B. Figure 10A illustrates an FM modulator and demodulator 20. This circuit is perticularly applicable for high voltage communication and particularly high voltage communication through power-line transformers. The circuit comprises an XR-2211 FSK demodulator 97 XR-2207 FSK generator 99 and MAX232 computer input/output interface 101. The values for $R_0$, $C_0$, $C_1$, $C_2$, $C_3$, and $C_4$ are utilized to alter the carrier frequencies (FA and FB). The values of $C_1$, $R_3$ and $R_4$ are varied to alter the FA and FB carrier frequencies.

Figure 10B illustrates an alternative FM modulator and demodulator 20' for high frequency communication for LAN and phone line communication. The circuit incorporates the XR-210 FSK demodulator 103, XR-2207 FSK 105 generator and MAX232 107 computer input/output interface. The values for $R_0$, $C_0$, $C_1$, $C_2$, $C_3$, and $C_4$ are utilized to alter the carrier frequencies (FA and FB). The values of $C_1$, $R_3$ and $R_4$ are varied to alter the FA and FB carrier frequencies.

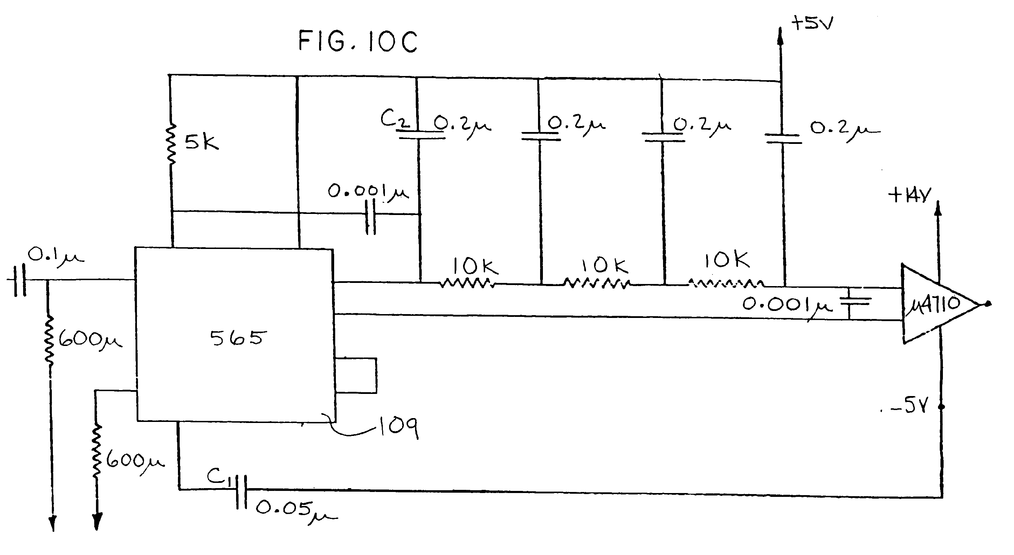

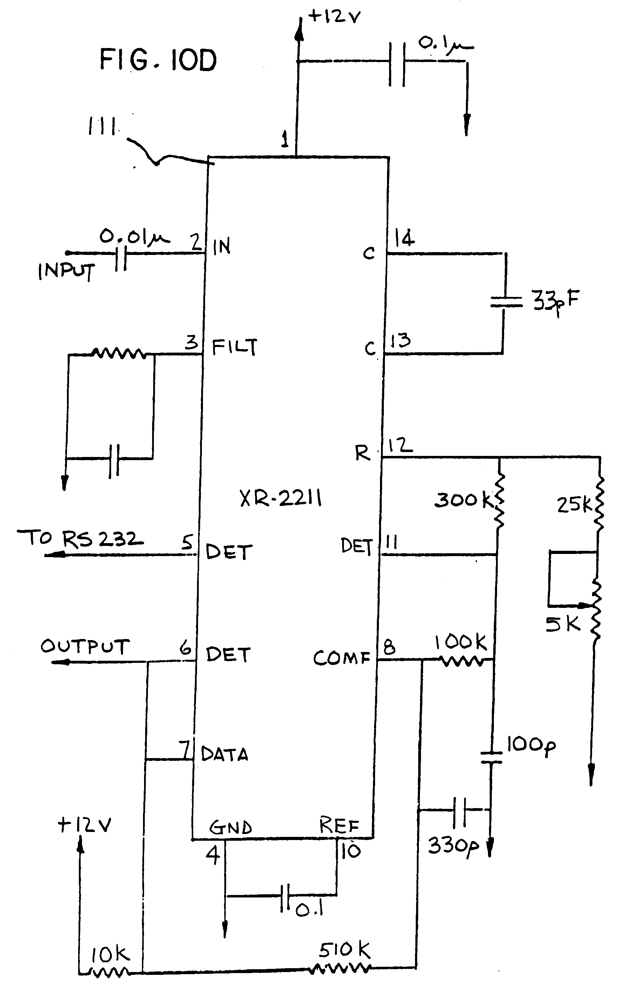

Figures 10C and 10D illustrate addition modulator/demodulator circuits 20″, 20‴ which can be utilized in the present invention. Figure 10C shows an FSK decoder using the 565 interface 109. The loop filter capacitor is chosen to set the proper overshoot on the output and a three-stage RC ladder filter is used to remove the noise frequency component. As shown in Figure 10D, another FSK chip, the XR2211 111, can be used to demodulate and the XR2207 (not shown) can be used for modulation.

## Modem Circuits

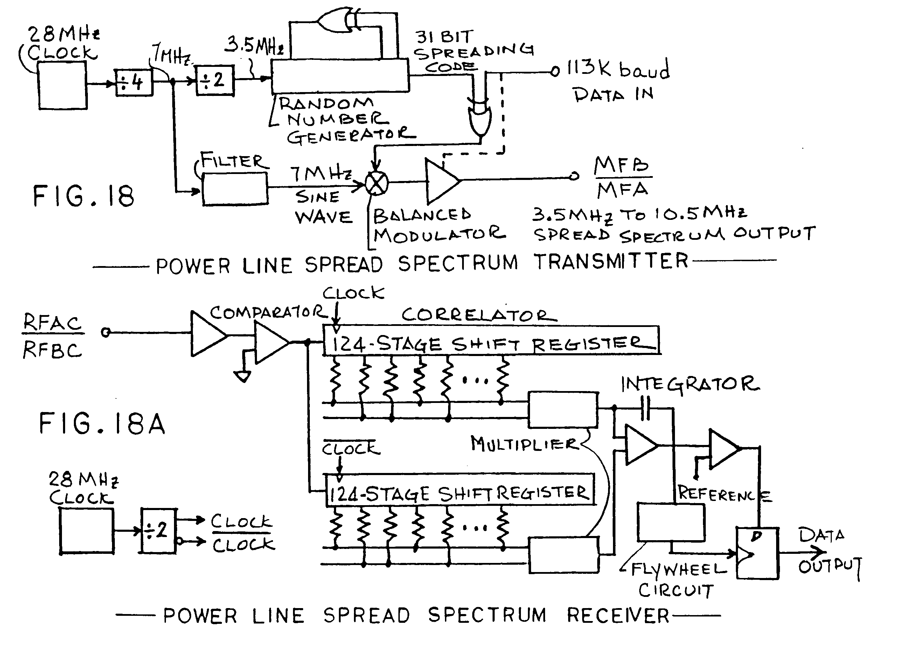

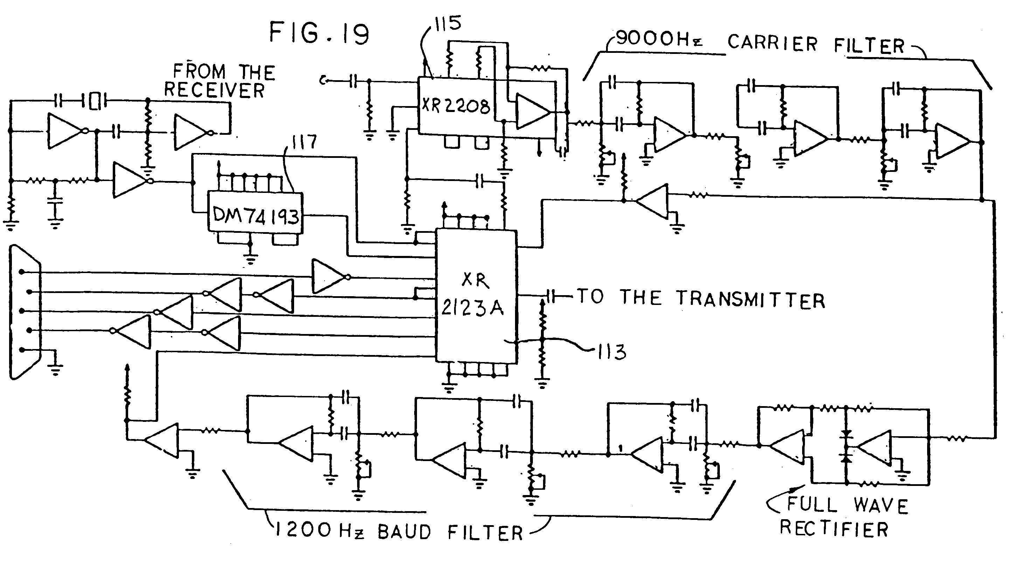

Figures 18 and 19 illustrate two complete modem configurations which can be utilized in the present invention. Figure 18 is a spread spectrum transmission and receiver modem. This circuit is suited for communication through high voltage AC and DC power lines and for communication through transformers. The spread spectrum modem can be demodulated in high noise levels.

Figure 19 illustrates a Bi-Polar Shift Keying transmission and receiver modem circuit particularly applicable for phone line and LAN communication. This circuit includes an XR 2123 modulator/demodulator 113, XR2208 Operation Multiplier 115, and DM74193 synchronous up/down counter 117. This circuit requires a smaller bandwidth for communication than FSK because it uses only one carrier frequency while changing sine and cosine waves. The carrier frequency must always be at least 10dB above the noise.

## Operational Example

The particular attributes of the apparatus and configurations of the present invention are perhaps best illustrated in view of the following comprehensive example described with reference to Figures 22-25. This example utilizes most of the coupler configurations and modems discussed above and illustrates how the communications apparatus and novel couplers of the present invention can be utilized in a comprehensive system using LAN, phone line, high voltage and low voltage power line communications, as well as communication through power line transformers.

Figure 22 illustrates an example of the couplers of the present invention as they may utilized by an electric power utility for reading home power meters. In this example, each home 119 receiving electric power from the utility would have a modem 121 and air coil transmitter and receiver coupler circuit 123 in accordance with the present invention coupled to the electricity meter 125. The couplers 123 would connect to the 240 low volt distribution transformer 126 situated on the utility pole 127 located adjacent to the house. The couplers will have the low voltage configuration capable of communicating through power line transformers such as discussed in section A.3. above. The system will utilize the transmitters, receivers, modulators/demodulator, or modem circuits disclosed in Figures 10A, 11 and 12. The distribution transformer will be connect to one of the three 13.2 KV power lines 129 on the utility pole.

At the other end of the system situated at a local substation 131, a second substation modem 133 is connected to one of three couplers 135 in accordance with the present invention. The couplers are encased in resin, as disclosed above, and will preferably have the high voltage side transformer configuration set forth in Figure 9C. The substation is itself connected via couplers 137 such as disclosed in section A.1 to the large central computer 139 of the utility (generally a VAX) via phone lines. The substation 131 and computer 139 will communicate via high speed communication couplers such as those disclosed in section A.1 at rates up to 10K baud as set forth herein using the transmitter, receiver and modulatory demodulator circuits of Figs. 10B, 11 and 12A.

When the utility desires to make a meter reading, the central computer 139 will issue an addressable command which is transmitted via a master modem 141 and coupler 137 to the particular substation at speeds up to 10K baud over power or conventional phone lines 138. The substation will then transmit an addressable command the particular meter via modem and couplers. The command is transmitted over the 13.2 KV line at speeds up to 1200 baud, through the distribution transformer, through the home couplers 123 and modem 121. A meter reading is recorded, transmitted by the home modem 121 through couplers 123, through distribution transformer 126, over the 13.2 KV power line 129 to the appropriate substation coupler 135 and to the substation modem 135. The system only requires between one and ten watts for power transmission in both directions.

From the substation, the meter reading may be transmitted via conventional phone lines 138 to the central computer 139. Additionally, as shown in Figure 22A the high speed phone line and LAN couplers of the present invention could be used within the utility to connect local workstations 141 to the central computer 139. For example, a clerical worker situated at a work station may access the VAX computer through the power lines of the facility via modems and high speed LAN or phone line couplers of the present invention at data transmission speeds of up to 10 Kbaud.

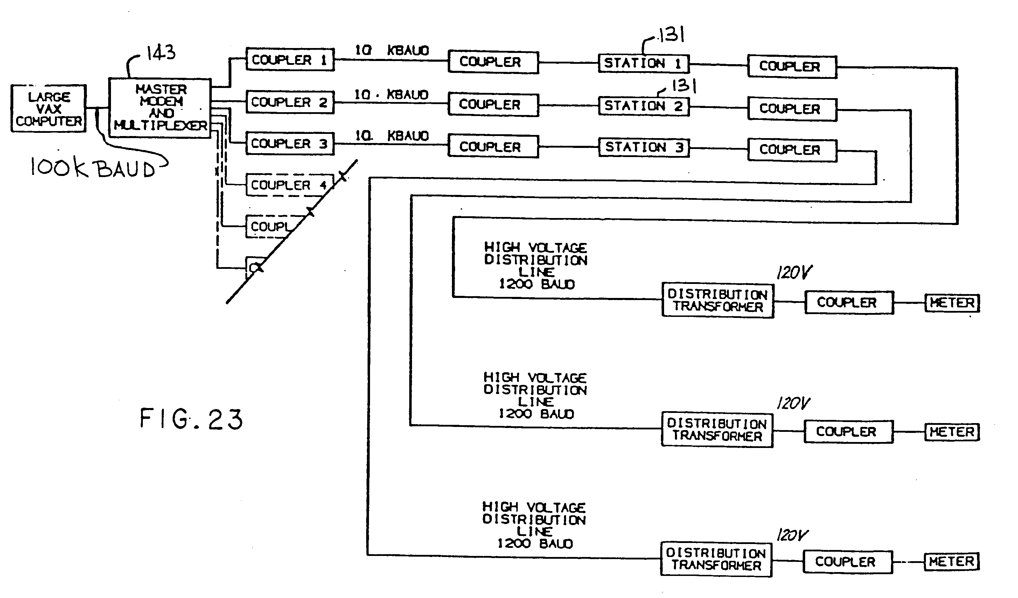

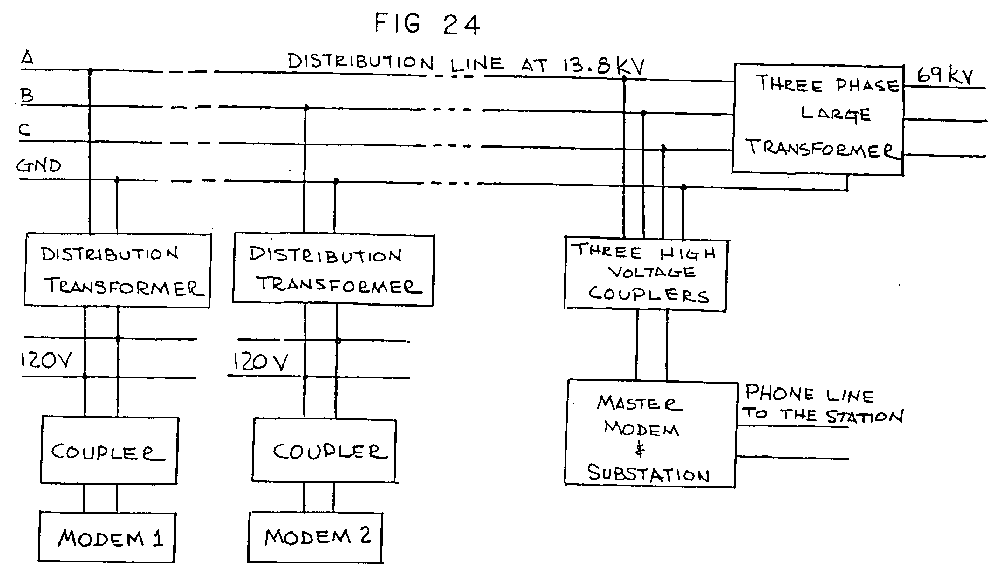

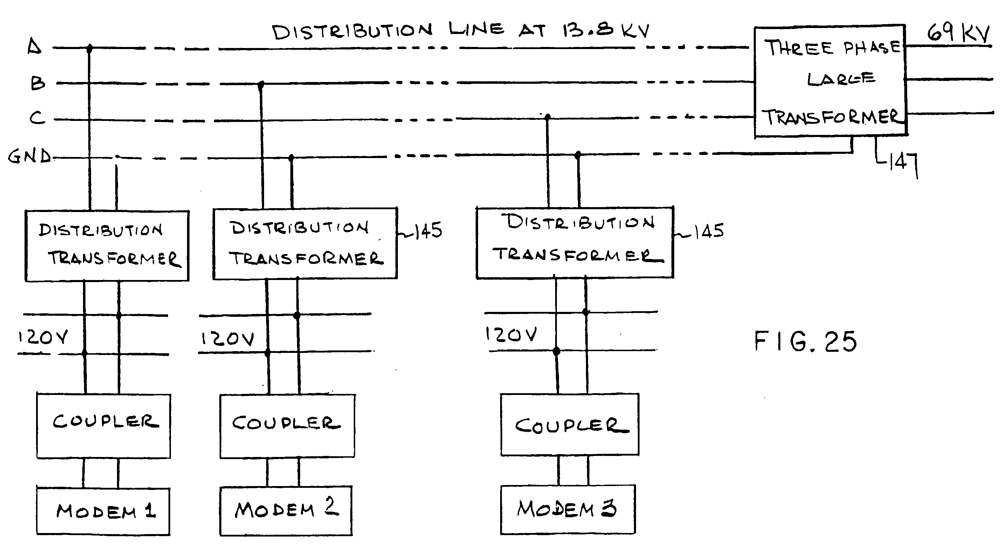

Figure 23 is a block diagram of an expanded system which may be utilized by a utility to meter a multiplicity of substations. In this embodiment the central computer would simultaneous read a large number of meters via a master modem and multiplexer coupled to a multiplicity of couplers 143. As shown, the computer communicates with each substation (1, 2, 3, etc.) over conventional phone lines. The respective substations then communicate with the individual meters at 1200 baud via high voltage distribution lines and through distribution transformers. Figure 24 is a simplified block diagram of the communication system of Figure 22. Figure 25 is a block diagram of how the couplers of the present invention can be utilized to communicate through two power line transformers 145 and through a three phase large transformer 147. In this configuration, the couplers will comprise low voltage couplers designed for communication through power line transformers as discussed above. It is to be noted that the couplers of the present invention will permit the simultaneous transmission and reception of more than one carrier frequency through the couplers. Hence, the couplers can be simuntaneously utilized by an electric utility for electric meter reading at a first frequency while a water utility utilizes the couplers at a second carrier frequency for water meter reading.

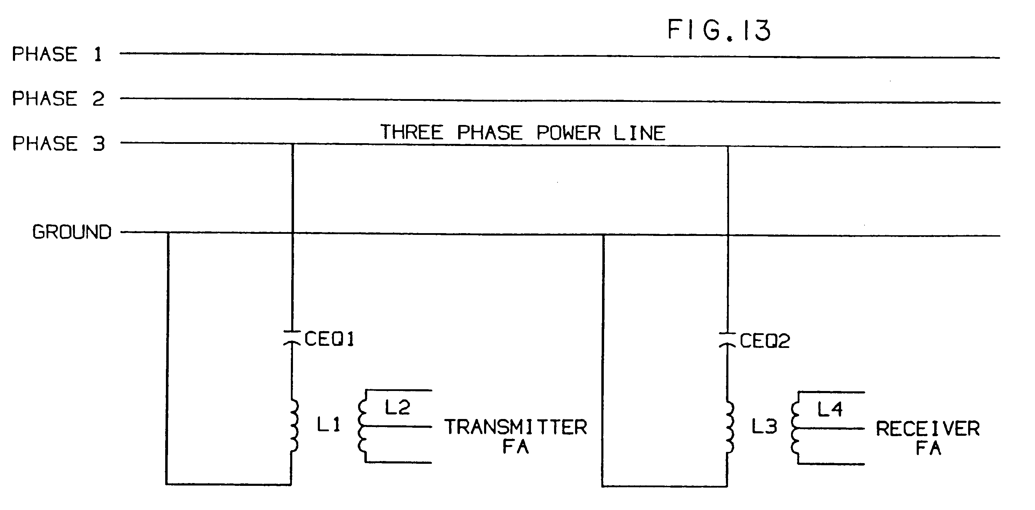

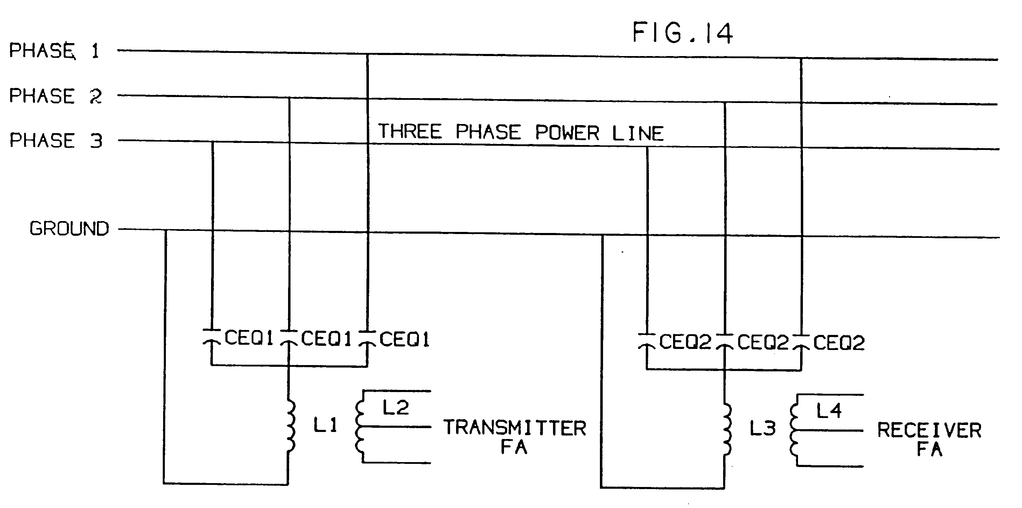

A final consideration of the present invention is the connection of the apparatus to a three phase power line. Figure 13 illustrates the general case of coupling the apparatus to the power line, phase to ground. In this format, the carrier frequency is undetectable by other phase-ground coupling connections and each phase is isolated from each other for communication purposes. Figure 14 illustrates a special three phase coupling connection to the power line, 3 phases to ground. This system utilizes all three phases from the power line and ground for communication. In this case, the carrier frequency is detectable on any other phase-ground coupling connection. In this manner, the phases are interconnected for communicating purposes.

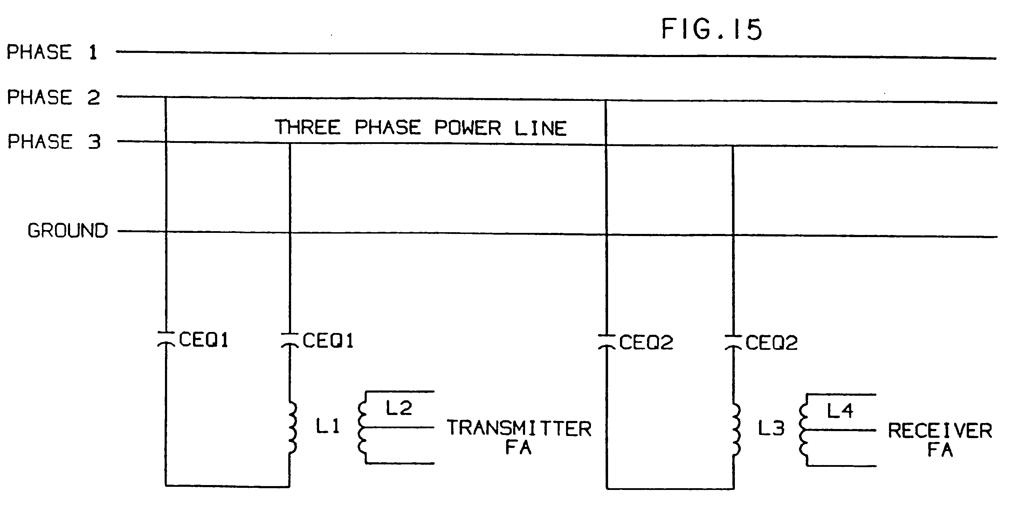

Figure 15 illustrates a special two phase coupling connection to the powerline, phase to phase 147. This system utilizes two phases from the power line for communication. The carrier frequency is detectable only on the two phase coupling connection. In this configuration, only the coupled two phases are connected for communication purposes.

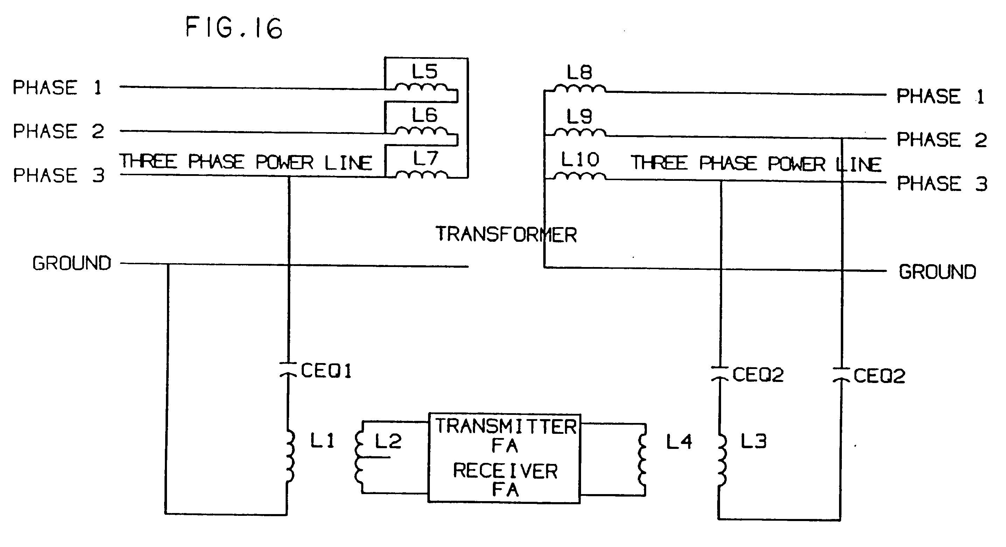

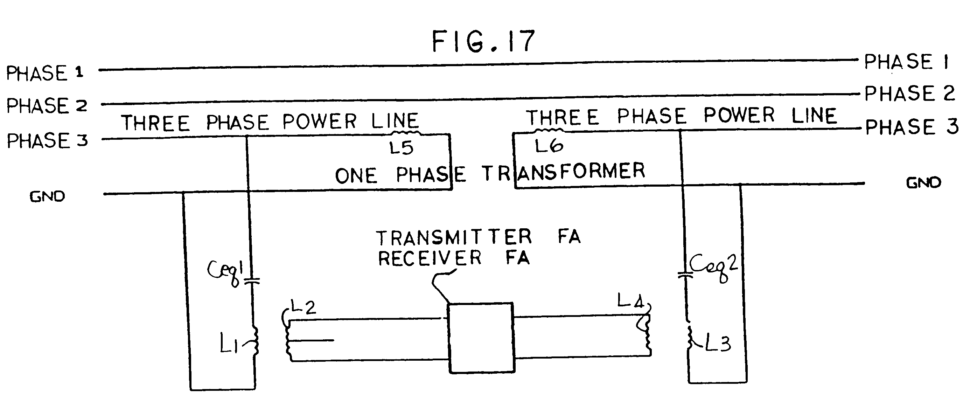

Figure 16 illustrates a three phase transformer coupling around delta and Y (Wye) transformers 149. This coupling system is generally utilized in Europe. The carrier frequency is detectable on the other power line. In this manner, two different high voltage power lines are connected to each other for communication purposes. Finally, Figure 17 illustrates a one phase transformer coupling which is generally used in the U.S.A. In this manner, the carrier frequency is detectable on the other power line. Accordingly, two different high voltage power lines are connected to each other for communication purposes.

It is to be understood, therefore, that within the scope of the appended claims, the present invention may be practiced otherwise than as specifically described herein.

## Claims

1. Communication apparatus comprising
   - coupler means (14,22), connected to an electrical line (12), having a characteristic output impedance,
   - said coupler means (14,22) including transformer means (36)
   characterized by
   - modulator means (20,28) for modulating a preselected carrier frequency signal having a high band frequency,
   - transmitter means (16,24) coupled to said modulator means (20,28) for transmitting said modulated carrier signal to said coupler means (14,22),
   - said transformer means (36) being air-core transformer means,
   - said air-core transformer means (36) being arranged in combination with capacitor means (34) forming an LC-circuit (30) that provides an input impedance which corresponds to the characteristic output impedance of the electrical line (12) at said preselected high band carrier frequency.

2. The communication apparatus of claim 1, characterized by
   - said air-core transformer means (36) including a primary winding (38) having a first diameter and coupled to said capacitor means (34), and
   - a secondary winding (40) having a second smaller diameter and extending coaxially within said primary winding (38) such that an air gap is created between said primary winding and said secondary winding.

3. The communication apparatus of claim 1 characterized by
   - said air-core transformer means (36) functioning as a phase linear inductively and capacitively coupled transformer.

4. The communication apparatus of claim 1, further characterized by
   - second coupler means (22) connected to said electrical line (12),
   - demodulator means (28) for demodulating said preselected carrier frequency signal, and
   - receiver means (26) coupled to said second coupler means (22) for conducting said modulated carrier signal to said demodulator means (28),
   - said second coupler means (22) including in combination a second air-core transformer means (44) and a second capacitor means (42) forming a second LC circuit (32) that provides an input impedance which corresponds to the characteristic output impedance of the electrical line (12) at said preselected high band carrier frequency.

5. The communication apparatus according to claim 2, characterized
   - by the ratio of the number of turns of said primary winding (38) to said secondary winding (40) is about one to one.

6. The communication apparatus according to claim 2, characterized by
   - the combination of the capacitance created between said primary winding (38) and said secondary winding (40) of said air-core transformer means (36) functioning as a high-pass filter.

7. The communication apparatus of claim 4 characterized by
   - said second air-core transformer means (44) having a primary winding (46) having a first diameter, said primary winding (46) being coupled to said capacitor means (42) and
   - a secondary winding (48) having a second smaller diameter, said secondary winding (48) extending coaxially within said primary winding (46) such that an air gap is created between said primary winding (46) and said secondary winding (48).

8. The communication apparatus according to claim 1, characterized by
   - said high band frequency being less than about 1 MHz.

9. The communication apparatus according to claim 1, characterized by
   - said high band frequency being less than about 160 KHz.

10. The communication apparatus according to claim 4, characterized by

- said high band frequency, measured at a point between said receiver means (26) and said second coupler means (22) comprising noise reduction of about twenty decibels at the bandwidth.

11. The communication apparatus according to claim 2 characterized by

- said air-coils (36,44) comprising impedance matching means such that the primary winding (38) resistivity for transmission and reception at a preselected carrier frequency is about equal to the smallest known characteristic impedance of the electrical line (12).

12. The communication apparatus according to claim 1, characterized by

- said coupler means (14,22) resonating at said preselected carrier frequency.

13. The communication apparatus of claim 1 characterized by

- said transmitter means (16,24) simultaneously transmitting at least a second carrier signal having a second frequency through said coupler means (14,22).

14. The communication apparatus according to claims 1 to 4, characterized by

- said first coupler means (14) including two LC circuits (34,42), coupled to said electrical line (12),
- both said LC circuits (34,42) including an RC circuit comprised of a capacitor means (34) and a resistor means (35), each consisting of at least one capacitor and at least one resistor, connected in parallel to each other,
- said primary winding (38) of said air-core transformer means (36) being connected in series with said RC circuit and said electrical line (12),
- said first transmitter means (16) being coupled to said first coupler means (14) at the secondary winding (40) of said air-core transformer means (36) for transmitting signals carried by a first carrier frequency across said electrical line (12),
- said first receiver means (26) being coupled to said first coupling means (14) at the secondary winding (48) of the air-core transformer means (44), that is not connected to said transmitter means (16) for receiving signals carried by a second carrier frequency from the electrical line (12),
- a first modem means (21) coupled between said first transmitter means (16) and said first receiver means (26) for modulating signals to be carried by said first carrier frequency and for demodulating said signals carried by said second carrier frequency,

- said second coupler means (22) including two LC circuits (34,42), coupled to said electrical line (12),
- both said LC circuits (34,42) including capacitor means (34) and resistor means (35), consisting of at least one capacitor and at least one resistor, connected in parallel to each other and in series between the electrical line (12) and the primary induction winding (46) of said air-core transformer means (44),
- second transmitter means (24), coupled to said second coupling means (22) of the secondary induction winding (48) of said air-core transformer means (44) for transmitting signals carried by a second carrier frequency across the electrical line (12),
- second receiver means (18), connected to said second coupling means (22) at the secondary winding (40) of said air-core transformer means (36) that is not connected to said transmitter means (24) for receiving signals carried by a first carrier frequency from the electrical line (12),
- a second modem means (23), coupled between said second transmitter means (24) and said second receiver means (18) for demodulating said signals to be carried by said first carrier frequency and modulating said signals carried by said second carrier frequency.

15. The communication apparatus according to claim 14, characterized by

- said LC circuits of said first and second coupler means (14,22) comprising a first plurality of capacitors and a first air coil including primary and secondary windings
- the diameter of said primary winding being greater than the diameter of said secondary winding thereby creating an air core between said primary and secondary windings,
- the other LC circuit being connected in parallel to the electrical line (12) and comprises a second plurality of capacitors and a second air coil including primary and secondary windings, the diameter of said primary winding being greater than the diameter od said secondary winding thereby creating an air-core between said primary and secondary windings,
- wherein said first plurality of capacitors are connected together in parallel between one of the power-lines of the electrical line (12) and said primary winding of said first air coil,

- said primary winding of said first air coil thereafter being serially connected to the other power-line of said electrical line (12), and said secondary winding of said first air coil is connected to its respective transmitter means, and
- wherein said second plurality of capacitors are serially connected together between said one of the power-lines of said electrical line (12) and said primary winding of said second air coil, said primary winding of said second air coil thereafter serially connected to the other power-line.

16. The communication apparatus according to claim 14, characterized by
- said first and second coupler means (14,22) each having a bandwidth of less than about 200 KHz.

17. The communication apparatus according to claim 14, characterized by
- said first and second coupler means (14,22) each having a bandwidth of less than about 20 KHz.

18. The communication apparatus according to claim 14, characterized by
- the induction component of said LC circuits in each of said first and second coupler means (14 and 22) being characterized as comprising two air-core inductors (36 and 44) combined to act as a capacitive air-core transformer which is inductively and capacitively coupled and phase shift linear.

19. The communication apparatus according to claim 14 characterized by
- the primary and secondary windings of said first and second air-core transformer means (36,44) functioning as an inductively and capacitively coupled transformer.

20. The communication apparatus according to claim 14 characterized by
- the ratio of the number of turns of said primary winding (38) to said secondary winding (40) in said first air-core transformer means (36) being about one to one.

21. The communication apparatus according to claim 14 characterized by
- the ratio of the number of turns of said primary winding (46) to secondary winding (48) in said second air-core transformer means (44) being about one to one.

22. The communication apparatus according to claim 14 characterized by
- the capacitance created between the respective primary windings (38,46) and secondary windings (40,48) of said air-core transformers (36 and 44) functioning as a high-pass filter with the secondary windings (40,48).

23. The communication apparatus according to claim 14 characterized by
- the primary windings (38,46) of said first and second coupler means (14,22) with said capacitors functioning as a band-pass filter.

24. The communication apparatus according to claim 14 characterized by
- said resistors of the first coupler means (14) dividing down the AC/DC voltages over said capacitor and resistor circuit.

25. The communication apparatus according to claim 14 characterized by
- said resistor(s) of the second coupler means (22) dividing down the AC/DC voltages over said capacitor and resistor circuit.

26. The communication apparatus according to claim 24 characterized by
- said capacitors of the first coupler means (14) resonating with the primary winding (38) of said first air-core transformer means (36).

27. The communication apparatus according to claim 24 characterized by
- said capacitors of the second coupler means (22) resonating with the primary winding (46) of said second air-core transformer (44).

28. The communication apparatus of claim 1 characterized by
- said capacitor (34) consisting of at least one capacitor and said coupler means (14) further comprising a resistor means (35) which in combination with said LC circuit (30) forms first LC means, said resistor means (35) consisting of at least one resistor, said capacitor means (34) and said resistor means (35) connected in parallel to each other and in series to said electrical line (12).

29. The communication apparatus of claim 28 characterized by
- said coupler means (14,22) further comprising a second LC means.

30. The communication apparatus of claim 4 characterized by

- said capacitor means (34) of said second coupler means (22) consisting of at least one capacitor and said second coupler means (22) further comprising a resistor means (35) which in combination with second LC circuit (32) forms a third LC means, said resistor means (35) consisting of at least one resistor, said capacitor means (34) and said resistor means (35) connected in parallel to each other and in series to said electrical line (12).

31. The communication apparatus of claim 30 characterized by

- said second coupler means (22) further comprising a fourth LC means.

32. The communication apparatus of claim 29 characterized by

- said first LC means and said second LC means connected in parallel to said electrical line (12).

33. The communication apparatus of claim 32 characterized by

- said third LC means and said fourth LC means connected in parallel to said electrical line (12).

34. The communication apparatus of claim 32 characterized by

- said third LC means and said fourth LC means connected in parallel to said electrical line (12).

35. The communication apparatus of claim 14 characterized by

- said two LC circuits (34,42) of said first coupler means (14) connected in parallel to said electrical line (12).

36. The communication apparatus of claim 14 characterized by

- said two LC circuits (34,42) of said second coupler means (22) connected in parallel to said electrical line (12).

**Patentansprüche**

1. Kommunikationseinrichtung enthaltend:
   - eine mit einer Elektrizitätsleitung (12) verbundene Kopplereinrichtung (14, 22) mit einer charakteristischen Ausgangsimpedanz,
   - wobei die Kopplereinrichtung (14, 22) eine Übertragereinrichtung (36) umfaßt,
   gekennzeichnet durch

   - eine Modulatoreinrichtung (20, 28) zur Modulation eines vorgewählten Trägerfrequenzsignals mit einer hohen Frequenz,
   - eine mit der Modulatoreinrichtung (20, 28) gekoppelte Sendeeinrichtung (16, 24) zum übertragen des modulierten Trägersignals auf die Kopplereinrichtung (14, 22),
   - die Übertragereinrichtung (36) ist eine eisenlose Übertragereinrichtung,
   - die eisenlose Übertragereinrichtung (36) ist in Kombination mit einer Kondensatoreinrichtung (34) zur Bildung eines LC-Kreises (30) angeordnet, der eine Eingangsimpedanz bereitstellt, die der charakteristischen Ausgangsimpedanz der Elektrizitätsleitung (12) bei der vorgewählten hohen Trägerfrequenz entspricht.

2. Kommunikationseinrichtung nach Anspruch 1, gekennzeichnet durch
   - die eisenlose Übertragereinrichtung (36) umfaßt eine Primärwicklung (38), die einen ersten Durchmesser aufweist und die mit der Kondensatoreinrichtung (34) gekoppelt ist, und
   - eine Sekundärwicklung (40), die einen zweiten kleineren Durchmesser aufweist und die sich koaxial innerhalb der Primärwicklung (38) so erstreckt, daß ein Luftspalt zwischen der Primärwicklung und der Sekundärwicklung gebildet ist.

3. Kommunikationseinrichtung nach Anspruch 1, gekennzeichnet durch
   - die eisenlose Übertragereinrichtung (36) wirkt als phasenlinearer induktiv und kapazitiv gekoppelter Übertrager.

4. Kommunikationseinrichtung nach Anspruch 1, ferner gekennzeichnet durch
   - eine zweite mit der Elektrizitätsleitung (12) verbundene Kopplereinrichtung (22),
   - eine Demodulatoreinrichtung (28) zur Demodulation des vorgewählten Trägerfrequenzsignals, und
   - eine mit der zweiten Kopplereinrichtung (22) gekoppelte Empfangseinrichtung (26) zum Übertragen des modulierten Trägersignals zu der Demodulatoreinrichtung (28),
   - die zweite Kopplereinrichtung (22) umfaßt in Kombination eine zweite eisenlose übertragereinrichtung (44) und eine zweite Kondensatoreinrichtung (42) zur Bildung eines zweiten LC-Kreises (32), der eine Eingangsimpedanz bereitstellt, die der charakteristischen Ausgangsimpedanz der Elektrizitätsleitung (12) bei der vorgewählten hohen Trägerfrequenz entspricht.

5. Kommunikationseinrichtung nach Anspruch 2, gekennzeichnet
- durch das Verhältnis der Windungszahlen der Primärwicklung (38) zu der Sekundärwicklung (40) ist etwa eins zu eins.

6. Kommunikationseinrichtung nach Anspruch 2, gekennzeichnet durch
- die Kombination der Kapazität, die zwischen der Primärwicklung (38) und der Sekundärwicklung (40) der eisenlosen Übertragereinrichtung (36) gebildet wird, wirkt als Hochpassfilter.

7. Kommunikationseinrichtung nach Anspruch 4, gekennzeichnet durch
- die zweite eisenlose Übertragereinrichtung (44) weist eine Primärwicklung (46) mit einem ersten Durchmesser auf, wobei die Primärwicklung (46) mit der Kondensatoreinrichtung (42) verbunden ist, und
- eine Sekundärwicklung (48) mit einem zweiten kleineren Durchmesser, wobei sich die Sekundärwicklung (48) koaxial innerhalb der Primärwicklung (46) so erstreckt, daß ein Luftspalt zwischen der Primärwicklung (46) und der Sekundärwicklung (48) gebildet ist.

8. Kommunikationseinrichtung nach Anspruch 1, gekennzeichnet durch
- die Hochfrequenz ist niedriger als etwa 1 MHz.

9. Kommunikationseinrichtung nach Anspruch 1, gekennzeichnet durch
- die Hochfrequenz ist niedriger als etwa 160 kHz.

10. Kommunikationseinrichtung nach Anspruch 4, gekennzeichnet durch
- die Hochfrequenz gemessen an einem Punkt zwischen der Empfangseinrichtung (26) und der zweiten Kopplereinrichtung (22) weist eine Störunterdrückung innerhalb der Bandbreite von etwa zwanzig Dezibel auf.

11. Kommunikationseinrichtung nach Anspruch 2, gekennzeichnet durch
- die Luftspulen (36, 44) umfassen Impedanzanpassungseinrichtungen, so daß der spezifische Widerstand der Primärwicklung (38) zum Senden und Empfangen bei einer vorgewählten Trägerfrequenz etwa gleich ist der kleinsten bekannten charakteristischen Impedanz der Elektrizitätsleitung (12) .

12. Kommunikationseinrichtung nach Anspruch 1, gekennzeichnet durch
- die Kopplereinrichtung (14, 22) schwingt mit bei der vorgewählten Trägerfrequenz.

13. Kommunikationseinrichtung nach Anspruch 1, gekennzeichnet durch
- die Sendeeinrichtung (16, 24) überträgt gleichzeitig wenigstens ein zweites Trägersignal mit einer zweiten Frequenz durch die Kopplereinrichtung (14, 22).

14. Kommunikationseinrichtung nach den Ansprüchen 1 bis 4, gekennzeichnet durch
- die erste Kopplereinrichtung (14) umfaßt zwei LC-Kreise (34, 42), die mit der Elektrizitätsleitung (12) gekoppelt sind,
- beide LC-Kreise (34, 42) umfassen einen RC-Kreis mit einer Kondensatoreinrichtung (34) und einer Widerstandseinrichtung (35), wobei jeder aus wenigstens einem Kondensator und wenigstens einem parallelgeschalteten Widerstand besteht,
- die Primärwicklung (38) der eisenlosen Übertragereinrichtung (36) ist in Reihe geschaltet mit dem RC-Kreis und der Elektrizitätsleitung (12),
- die erste Sendeeinrichtung (16) ist mit der ersten Kopplereinrichtung (14) gekoppelt an der Sekundärwicklung (40) der eisenlosen Übertragereinrichtung (36) zur Übertragung von Signalen, die von einer ersten Trägerfrequenz über die Elektrizitätsleitung (12) übertragen werden,
- die erste Empfangseinrichtung (26) ist mit der ersten Kopplereinrichtung (14) gekoppelt an der Sekundärwicklung (48) der eisenlosen Übertragereinrichtung (44), die nicht mit der Sendeeinrichtung (16) verbunden ist, zum Empfangen von Signalen, die von einer zweiten Trägerfrequenz über die Elektrizitätsleitung (12) übertragen werden,
- eine erste Modulationseinrichtung (21), die zwischen die erste Sendeeinrichtung (16) und die erste Empfangseinrichtung (26) zur Modulation von Signalen eingekoppelt ist, die von der ersten Trägerfrequenz zu übertragen sind, und zur Demodulation von den Signalen, die von der zweiten Trägerfrequenz übertragen werden,
- die zweite Kopplereinrichtung (22) umfaßt zwei LC-Kreise (34, 42), die mit der Elektrizitätsleitung (12) gekoppelt sind,
- beide LC-Kreise (34, 42) umfassen eine Kondensatoreinrichtung (34) und eine Widerstandseinrichtung (35), die aus wenigstens einem Kondensator und wenigstens einem parallelgeschalteten Widerstand bestehen und in Reihe zwischen die Elektrizitätsleitung (12) und die Primärinduktionswicklung (46) der eisenlosen Übertragereinrichtung (44) geschaltet sind,

- eine zweite Sendeeinrichtung (24), die mit der zweiten Kopplereinrichtung (22) der Sekundärinduktionswicklung (48) der eisenlosen Übertragereinrichtung (44) zum Übertragen von Signalen, die von einer zweiten Trägerfrequenz über die Elektrizitätsleitung (12) übertragen werden, gekoppelt ist,
- eine zweite Empfangseinrichtung (18), die mit der zweiten Kopplereinrichtung (22) an der Sekundärwicklung (40) der eisenlosen Übertragereinrichtung (36) verbunden ist, die nicht mit der Sendeeinrichtung (24) verbunden ist, zum Empfangen von über eine erste Trägerfrequenz übertragenen Signalen von der Elektrizitätsleitung (12),
- eine zweite Modulationseinrichtung (23), die zwischen die zweite Sendeeinrichtung (24) und die zweite Empfangseinrichtung (18) zur Demodulation der Signale, die von der ersten Trägerfrequenz zu übertragen sind, und zur Modulation von den Signalen, die von der zweiten Trägerfrequenz übertragen werden, eingekoppelt ist.

15. Kommunikationseinrichtung nach Anspruch 14, gekennzeichnet durch
    - die LC-Kreise der ersten und zweiten Kopplereinrichtung (14, 22) umfassen eine erste Mehrzahl von Kondensatoren und eine erste Luftspule mit Primär- und Sekundärwicklungen,
    - der Durchmesser der Primärwicklung ist größer als der Durchmesser der Sekundärwicklung und erzeugt dadurch einen Luftkern zwischen den Primär- und Sekundärwicklungen,
    - der andere LC-Kreis ist parallel zu der Elektrizitätsleitung (12) geschaltet und umfaßt eine zweite Mehrzahl von Kondensatoren und eine zweite Luftspule mit Primär- und Sekundärwicklungen, wobei der Durchmesser der Primärwicklung größer ist als der Durchmesser der Sekundärwicklung und dadurch einen Luftkern zwischen den Primär- und Sekundärwicklungen erzeugt,
    - wobei die erste Mehrzahl von Kondensatoren miteinander parallelgeschaltet sind zwischen einer der Stromversorgungsleitungen der Elektrizitätsleitung (12) und der Primärwicklung der ersten Luftspule,
    - die Primärwicklung der ersten Luftspule ist anschließend in Reihe geschaltet mit der anderen Stromversorgungsleitung der Elektrizitätsleitung (12) und die Sekundärwicklung der ersten Luftspule ist mit seiner entsprechenden Sendeeinrichtung verbunden und

- wobei die zweite Mehrzahl von Kondensatoren miteinander in Reihe geschaltet ist zwischen der einen Stromversorgungsleitung der Elektrizitätsleitung (12) und der Primärwicklung der zweiten Luftspule, wobei die Primärwicklung der zweiten Luftspule anschließend in Reihe geschaltet ist mit der anderen Stromversorgungsleitung.

16. Kommunikationseinrichtung nach Anspruch 14, gekennzeichnet durch
    - die erste und zweite Kopplereinrichtung (14, 22) weisen jeweils eine Bandbreite von weniger als etwa 200 kHz auf.

17. Kommunikationseinrichtung nach Anspruch 14, gekennzeichnet durch
    - die erste und zweite Kopplereinrichtung (14, 22) weisen jeweils eine Bandbreite von weniger als etwa 20 kHz auf.

18. Kommunikationseinrichtung nach Anspruch 14, gekennzeichnet durch
    - die induktive Komponente der LC-Kreise in jeder der ersten und zweiten Kopplereinrichtung (14 und 22) ist gekennzeichnet durch Enthalten von zwei eisenlosen Induktionsspulen (36 und 44), die kombiniert sind, um als kapazitiver eisenloser Übertrager zu wirken, der induktiv und kapazitiv gekoppelt und phasenverschiebungslinear ist.

19. Kommunikationseinrichtung nach Anspruch 14, gekennzeichnet durch
    - die Primär- und Sekundärwicklungen der ersten und zweiten eisenlosen Übertragereinrichtungen (36, 44) wirken als induktiv und kapazitiv gekoppelter Übertrager.

20. Kommunikationseinrichtung nach Anspruch 14, gekennzeichnet durch
    - das Verhältnis der Zahl der Windungen der Primärwicklung (38) zu der Sekundärwicklung (40) in der ersten eisenlosen Übertragereinrichtung (36) beträgt etwa eins zu eins.

21. Kommunikationseinrichtung nach Anspruch 14, gekennzeichnet durch
    - das Verhältnis der Zahl der Windungen der Primärwicklung (46) zu der Sekundärwicklung (48) in der zweiten eisenlosen Übertragereinrichtung (44) beträgt etwa eins zu eins.

22. Kommunikationseinrichtung nach Anspruch 14, gekennzeichnet durch

- die Kapazität, die zwischen den entsprechenden Primärwicklungen (38, 46) und Sekundärwicklungen (40, 48) der eisenlosen Übertrager (36 und 44) erzeugt wird, wirkt mit den Sekundärwicklungen (40, 48) als Hochpassfilter.

23. Kommunikationseinrichtung nach Anspruch 14, gekennzeichnet durch

- die Primärwicklungen (38, 46) der ersten und zweiten Kopplereinrichtung (14, 22) wirkt mit den Kondensatoren als Bandpassfilter.

24. Kommunikationseinrichtung nach Anspruch 14, gekennzeichnet durch

- die Widerstände der ersten Kopplereinrichtung (14) teilen die Gleich-/Wechselspannungen über die Kondensator- und Widerstandsschaltung herab.

25. Kommunikationseinrichtung nach Anspruch 14, gekennzeichnet durch

- der oder die Widerstände der zweiten Kopplereinrichtung (22) teilen die Gleich-/Wechselspannungen über die Kondensator- und Widerstandsschaltung herab.

26. Kommunikationseinrichtung nach Anspruch 24, gekennzeichnet durch

- die Kondensatoren der ersten Kopplereinrichtung (14) schwingen mit der Pimärwicklung (38) der ersten eisenlosen Übertragereinrichtung (36).

27. Kommunikationseinrichtung nach Anspruch 24, gekennzeichnet durch

- die Kondensatoren der zweiten Kopplereinrichtung (22) schwingen mit der Pimärwicklung (46) des zweiten eisenlosen Übertragers (44).

28. Kommunikationseinrichtung nach Anspruch 1, gekennzeichnet durch

- der Kondensator (34) besteht aus wenigstens einem Kondensator und die Kopplereinrichtung (14) umfaßt ferner eine Widerstandseinrichtung (35), die in Kombination mit dem LC-Kreis (30) eine erste LC-Anordnung bildet, wobei die Widerstandseinrichtung (35) aus wenigstens einem Widerstand besteht, wobei die Kondensatoreinrichtung (34) und die Widerstandseinrichtung (35) zueinander parallel und in Reihe zu der Elektrizitätsleitung (12) geschaltet sind.

29. Kommunikationseinrichtung nach Anspruch 28, gekennzeichnet durch

- die Kopplereinrichtung (14, 22) umfaßt ferner eine zweite LC-Anordnung.

30. Kommunikationseinrichtung nach Anspruch 4, gekennzeichnet durch

- die Kondensatoreinrichtung (34) der zweiten Kopplereinrichtung (22) besteht aus wenigstens einem Kondensator und die zweite Kopplereinrichtung (22) umfaßt ferner eine Widerstandseinrichtung (35), die in Kombination mit einem zweiten LC-Kreis (32) eine dritte LC-Anordnung bildet, wobei die Widerstandseinrichtung (35) aus wenigstens einem Widerstand besteht, wobei die Kondensatoreinrichtung (34) und die Widerstandseinrichtung (35) zueinander parallel und in Reihe zu der Elektrizitätsleitung (12) geschaltet sind.

31. Kommunikationseinrichtung nach Anspruch 30, gekennzeichnet durch

- die zweite Kopplereinrichtung (22) umfaßt ferner eine vierte LC-Anordnung.

32. Kommunikationseinrichtung nach Anspruch 29, gekennzeichnet durch

- die erste LC-Anordnung und die zweite LC-Anordnung sind parallel zu der Elektrizitätsleitung (12) geschaltet.

33. Kommunikationseinrichtung nach Anspruch 32, gekennzeichnet durch

- die dritte LC-Anordnung und die vierte LC-Anordnung sind parallel zu der Elektrizitätsleitung (12) geschaltet.

34. Kommunikationseinrichtung nach Anspruch 32, gekennzeichnet durch

- die dritte LC-Anordnung und die vierte LC-Anordnung sind parallel zu der Elektrizitätsleitung (12) geschaltet.

35. Kommunikationseinrichtung nach Anspruch 14, gekennzeichnet durch

- die beiden LC-Kreise (34, 42) der ersten Kopplereinrichtung (14) sind parallel zu der Elektrizitätsleitung (12) geschaltet.

36. Kommunikationseinrichtung nach Anspruch 14, gekennzeichnet durch

- die beiden LC-Kreise (34, 42) der zweiten Kopplereinrichtung (22) sind parallel zu der Elektrizitätsleitung (12) geschaltet.

**Revendications**

1. Dispositif de transmission, comprenant
   - des moyens coupleurs (14, 22), reliés à une ligne électrique (12), ayant une impédance de sortie caractéristique,
   - lesdits moyens coupleurs (14, 22) comprenant un moyen transformateur (36), caractérisé par

- des moyens modulateurs (20, 28) pour moduler un signal à fréquence porteuse présélectionnée ayant une fréquence de bande élevée,
- des moyens émetteurs (16, 24), reliés auxdits moyens modulateurs (20, 28) pour transmettre ledit signal à porteuse modulée auxdits moyens coupleurs (14, 22),
- ledit moyen transformateur étant un moyen transformateur à air, et
- ledit moyen transformateur à air (36) étant disposé en combinaison avec un moyen formant condensateur (34) constituant un circuit LC (à inductance et capacité) (30) qui assure une impédance d'entrée, qui correspond à l'impédance de sortie caractéristique de la ligne électrique (12) à ladite fréquence porteuse de bande élevée présélectionnée.

2. Dispositif de transmission selon la revendication 1, caractérisé en ce que
   - ledit moyen transformateur à air (36) comprend un enroulement primaire (38) ayant un premier diamètre et étant relié audit moyen formant condensateur (34), et
   - un enroulement secondaire (40), ayant un second diamètre plus petit, s'étend de manière coaxiale à l'intérieur dudit enroulement primaire (38), de manière à créer un espace d'air entre ledit enroulement primaire et ledit enroulement secondaire.

3. Dispositif de transmission selon la revendication 1, caractérisé en ce que
   - ledit moyen transformateur à air (36) fonctionne comme un transformateur linéaire à couplage de phase par induction et par capacité.

4. Dispositif de transmission selon la revendication 1, caractérisé en outre par
   - un second moyen coupleur (22) relié à ladite ligne électrique (12),
   - un moyen démodulateur (28) pour démoduler ledit signal à fréquence porteuse présélectionnée, et
   - un moyen récepteur (26), relié audit second moyen coupleur (22) pour acheminer ledit signal à porteuse modulée vers ledit moyen démodulateur (28), et
   - ledit second moyen coupleur (22), comprenant en combinaison un second moyen transformateur à air (44) et un second moyen formant condensateur (42), constituant un second circuit LC (32) qui assure une impédance d'entrée, qui correspond à l'impédance de sortie caractéristique de la ligne électrique (12) à ladite fréquence porteuse de bande élevée présélectionnée.

5. Dispositif de transmission selon la revendication 2, caractérisé en ce que
   - le rapport du nombre des spires dudit enroulement primaire (38) audit enroulement secondaire (40) est d'environ un pour un.

6. Dispositif de transmission selon la revendication 2, caractérisé en ce que
   - la combinaison de la capacité, créée entre ledit enroulement primaire (38) et ledit enroulement secondaire (40) dudit moyen transformateur à air (36) fonctionne comme un filtre passehaut.

7. Dispositif de transmission selon la revendication 4, caractérisé en ce que
   - ledit second moyen transformateur à air (44) comporte un enroulement primaire (46) ayant un premier diamètre, ledit enroulement primaire (46) étant relié audit moyen formant condensateur (42), et par
   - un enroulement secondaire (48) ayant un second diamètre plus petit, ledit enroulement secondaire (48) s'étendant de manière coaxiale à l'intérieur dudit enroulement primaire (46) de manière à créer un espace d'air entre ledit enroulement primaire (46) et ledit enroulement secondaire (48).

8. Dispositif de transmission selon la revendication 1, caractérisé en ce que
   - ladite fréquence de bande élevée est inférieure à environ 1 MHz.

9. Dispositif de transmission selon la revendication 1, caractérisé en ce que
   - ladite fréquence de bande élevée est inférieure à environ 160 KHz.

10. Dispositif de transmission selon la revendication 4, caractérisé en ce que
    - ladite fréquence de bande élevée, mesurée en un point entre ledit moyen récepteur (26) et ledit second moyen coupleur (22) comporte une réduction du bruit d'environ vingt décibels à la largeur de bande.

11. Dispositif de transmission selon la revendication 2, caractérisé en ce que
    - lesdites bobines à air (36, 44) comprennent un moyen d'adaptation d'impédance afin que la résistivité de l'enroulement primaire (38) pour l'émission et pour la réception à une fréquence porteuse présélectionnée soit à peu près égale à la plus petite impédance caractéristique connue de la ligne électrique (12).

12. Dispositif de transmission selon la revendication 1, caractérisé en ce que

- lesdits moyens coupleurs (14, 22) résonnent à ladite fréquence porteuse présélectionnée.

13. Dispositif de transmission selon la revendication 1, caractérisé en ce que

- lesdits moyens émetteurs (16, 24) émettent simultanément au moins un second signal à porteuse ayant une seconde fréquence, par l'intermédiaire desdits moyens coupleurs (14, 22).

14. Dispositif de transmission selon les revendications 1 à 4, caractérisé en ce que

- ledit premier moyen coupleur (14) comprend deux circuits LC (34, 42), reliés à ladite ligne électrique (12),
- lesdits deux circuits LC (34, 42) comprennent un circuit RC (à résistance et capacité) composé d'un moyen formant condensateur (34) et d'un moyen formant résistance (35), chacun consistant en au moins un condensateur et au moins une résistance, montés en parallèle l'un à l'autre,
- ledit enroulement primaire (38) dudit moyen transformateur à air (36) est relié en série audit circuit RC et à ladite ligne électrique (12),
- ledit premier moyen émetteur (16) est relié audit premier moyen coupleur (14) au niveau de l'enroulement secondaire (40) dudit moyen transformateur à air (36) afin de transmettre sur ladite ligne électrique (12) des signaux portés par une première fréquence porteuse,
- ledit premier moyen récepteur (26) est relié audit premier moyen coupleur (14) au niveau de l'enroulement secondaire (48) du moyen transformateur à air (44), qui n'est pas relié audit moyen émetteur (16), afin de recevoir de la ligne électrique (12) des signaux portés par une seconde fréquence porteuse,
- un premier moyen formant modem (21), étant monté entre ledit premier moyen émetteur (16) et ledit premier moyen récepteur (26) afin de moduler des signaux à porter par ladite première fréquence porteuse et de démoduler lesdits signaux portés par ladite seconde fréquence porteuse,
- ledit second moyen coupleur (22) comprend deux circuits LC (34, 42), reliés à ladite ligne électrique (2),
- lesdits deux circuits LC (34, 42) comprennent un moyen formant condensateur (34) et un moyen formant résistance (35), consistant en au moins un condensateur et au moins une résistance, montés en parallèle l'un à l'autre et en série entre la ligne électrique (12) et l'enroulement primaire à induction (46) dudit moyen transformateur à air (44),

- le second moyen émetteur (24) est relié audit second moyen coupleur (22) de l'enroulement secondaire à induction (48) dudit transformateur à air (44) afin d'émettre des signaux portés par une seconde fréquence porteuse, sur la ligne électrique (12),
- un second moyen récepteur (18) est relié audit second moyen coupleur (22) au niveau de l'enroulement secondaire (40) dudit moyen transformateur à air (36), qui n'est pas relié audit moyen émetteur (24), afin de recevoir de la ligne électrique (12) des signaux portés par une première fréquence porteuse, et
- un second moyen formant modem (23), étant monté entre ledit second moyen émetteur (24) et ledit second moyen récepteur (18) afin de démoduler lesdits signaux à porter par ladite première fréquence porteuse et de moduler lesdits signaux portés par ladite seconde fréquence porteuse.

15. Dispositif de transmission selon la revendication 14, caractérisé en ce que

- lesdits circuits LC desdits premier et second moyens coupleurs (14, 22) comprennent une première pluralité de condensateurs et une première bobine à air comprenant des enroulements primaire et secondaire,
- le diamètre dudit enroulement primaire est supérieur au diamètre dudit enroulement secondaire, pour ainsi créer un espace d'air entre lesdits enroulements primaire et secondaire,
- l'autre circuit LC est monté en parallèle à la ligne électrique (12) et comprend une seconde pluralité de condensateurs et une seconde bobine à air, comprenant des enroulements primaire et secondaire, le diamètre dudit enroulement primaire étant supérieur au diamètre dudit enroulement secondaire pour ainsi créer un espace d'air entre lesdits enroulements primaire et secondaire,
- dans lequel ladite première pluralité de condensateurs sont montés ensemble en parallèle, entre l'une des lignes de transport d'énergie de la ligne électrique (12) et ledit enroulement primaire de ladite première bobine à air,

- ledit enroulement primaire de ladite première bobine à air étant ensuite relié en série à l'autre ligne de transport d'énergie de ladite ligne électrique (12), et ledit enroulement secondaire de ladite première bobine à air étant relié à son moyen émetteur correspondant, et
- dans lequel ladite seconde pluralité de condensateurs sont montés ensemble en série entre ladite une des lignes de transport d'énergie de ladite ligne électrique (12) et ledit enroulement primaire de ladite seconde bobine à air, ledit enroulement primaire de ladite seconde bobine à air étant ensuite relié en série à l'autre ligne de transport d'énergie.

16. Dispositif de transmission selon la revendication 14, caractérisé en ce que

    - lesdits premier et second moyens coupleurs (14, 22) ont chacun une largeur de bande inférieure à environ 200 KHz.

17. Dispositif de transmission selon la revendication 14, caractérisé en ce que

    - lesdits premier et second moyens coupleurs (14, 22) ont chacun une largeur de bande inférieure à environ 20 KHz.

18. Dispositif de transmission selon la revendication 14, caractérisé par

    - l'élément d'induction desdits circuits LC dans chacun desdits premier et second moyens coupleurs (14 et 22), étant caractérisé en ce qu'il comprend deux bobines d'inductance à air (36 et 44) combinées pour fonctionner comme un transformateur à air capacitif, qui est à couplage par induction et par capacité et à déphasage linéaire.

19. Dispositif de transmission selon la revendication 14, caractérisé en ce que

    - les enroulements primaires et secondaires desdits premier et second moyens transformateurs à air (36, 44) fonctionnent comme un transformateur à couplage par induction et par capacité.

20. Dispositif de transmission selon la revendication 14, caractérisé en ce que

    - le rapport du nombre de spires dudit enroulement primaire (38) audit enroulement secondaire (40) dans ledit premier moyen transformateur à air (36) est d'environ un pour un.

21. Dispositif de transmission selon la revendication 14, caractérisé en ce que

    - le rapport du nombre de spires dudit enroulement primaire (46) audit enroulement secondaire (48) dans ledit second moyen transformateur à air (44) est d'environ un pour un.

22. Dispositif de transmission selon la revendication 14, caractérisé en ce que

    - la capacité créée entre les enroulements primaires (38, 46) et les enroulements secondaires (40, 48) respectifs desdits transformateurs à air (36 et 44) fonctionne comme un filtre passe-haut, avec les enroulements secondaires (40, 48).

23. Dispositif de transmission selon la revendication 14, caractérisé en ce que

    - les enroulements primaires (38, 46) desdits premier et second moyens coupleurs (14, 22), avec lesdits condensateurs, fonctionnent comme un filtre passe-bande.

24. Dispositif de transmission selon la revendication 14, caractérisé en ce que

    - lesdites résistances du premier moyen coupleur (14) divisent les tensions alternatives/continues sur ledit circuit à condensateur et à résistance.

25. Dispositif de transmission selon la revendication 14, caractérisé en ce que

    coupleur (22) divise(nt) les tensions alternatives/continues sur ledit circuit à condensateur et à résistance.

26. Dispositif de transmission selon la revendication 24, caractérisé en ce que

    - lesdits condensateurs du premier moyen coupleur (14) résonnent avec l'enroulement primaire (38) dudit premier moyen transformateur à air (36).

27. Dispositif de transmission selon la revendication 24, caractérisé en ce que

    - lesdits condensateurs du second moyen coupleur (22) résonnent avec l'enroulement primaire (46) dudit second transformateur à air (44).

28. Dispositif de transmission selon la revendication 1, caractérisé en ce que

    - ledit condensateur (34) consiste en au moins un condensateur et en ce que ledit moyen coupleur (14) comprend en outre un moyen formant résistance (35) qui, en combinaison avec ledit circuit LC (30), constitue un premier moyen LC, ledit moyen formant résistance (35) consistant en au moins une résistance, ledit moyen formant condensateur (34) et ledit moyen formant résistance (35) étant montés en parallèle l'un à l'autre et en série avec ladite ligne électrique (12).

**29.** Dispositif de transmission selon la revendication 28, caractérisé en ce que

- lesdits moyens coupleurs (14, 22) comprennent en outre un second moyen LC.

**30.** Dispositif de transmission selon la revendication 4, caractérisé en ce que

- ledit moyen formant condensateur (34) dudit second moyen coupleur (22) consiste en au moins un condensateur, et en ce que ledit second moyen coupleur (22) comprend en outre un moyen formant résistance (35) qui, en combinaison avec un deuxième circuit LC (32) forme un troisième moyen LC, ledit moyen formant résistance (35) consistant en au moins une résistance, ledit moyen formant condensateur (34) et ledit moyen formant résistance (35) étant montés en parallèle l'un à l'autre et en série avec ladite ligne électrique (12).

**31.** Dispositif de transmission selon la revendication 30, caractérisé en ce que

- ledit second moyen coupleur (22) comprend en outre un quatrième moyen LC.

**32.** Dispositif de transmission selon la revendication 29, caractérisé en ce que

- ledit premier moyen LC et ledit deuxième moyen LC sont reliés en parallèle à ladite ligne électrique (12).

**33.** Dispositif de transmission selon la revendication 32, caractérisé en ce que

- ledit troisième moyen LC et ledit quatrième moyen LC sont reliés en parallèle à ladite ligne électrique (12).

**34.** Dispositif de transmission selon la revendication 32, caractérisé en ce que

- ledit troisième moyen LC et ledit quatrième moyen LC sont reliés en parallèle à ladite ligne électrique (12).

**35.** Dispositif de transmission selon la revendication 14, caractérisé en ce que

- lesdits deux circuits LC (34, 42) dudit premier moyen coupleur (14) sont reliés en parallèle à ladite ligne électrique (12).

**36.** Dispositif de transmission selon la revendication 14, caractérisé en ce que

- lesdits deux circuits LC (34, 42) dudit second moyen coupleur (22) sont reliés en parallèle à ladite ligne électrique (12).

# FIG. I

# FIG.2

PHASE

HIGH VOLTAGE   POWER LINE

GROUND

COUPLING CAPACITOR

C3

FIG.3

EP 0 470 185 B1

# FIG . 4

FIG.5

FIG. 6

FIG.6A

FIG.7

FIG.8

FIG. 9A

FIG. 9B

FIG. 9C

POWER LINE PHASE

$C_{eq}$

T_FA1

RECEIVER

R_FB

TRANSMITTER

+Vcc

R_FB

T_FA2

N3

$N_1 \approx N_2 \approx N_3$

PRIMARY COIL & TRANSMITTER

POWER LINE GROUND

D1 PRIMING COIL

D2 TRANSMITTER

D3 RECEIVER

54   56   58

EP 0 470 185 B1

FIG. 10A

FIG. 10B

# FIG. 10C

EP 0 470 185 B1

FIG. 10D

FIG.11

EP 0 470 185 B1

FIG.12

FIG. 12A

40

EP 0 470 185 B1

FIG.13

PHASE 1 ——————————————————————————————

PHASE 2 ——————————————————————————————

THREE PHASE POWER LINE

PHASE 3 ——————————————————————————————

GROUND ——————————————————————————————

⊥ CEQ1

⊥ CEQ2

L1  { L2  TRANSMITTER FA

L3  { L4  RECEIVER FA

FIG.14

PHASE 1

PHASE 2

PHASE 3

THREE PHASE POWER LINE

GROUND

CEQ1  CEQ1  CEQ1

CEQ2  CEQ2  CEQ2

L1  L2  TRANSMITTER FA

L3  L4  RECEIVER FA

EP 0 470 185 B1

FIG.15

PHASE 1

PHASE 2

THREE PHASE POWER LINE

PHASE 3

GROUND

CEQ1  CEQ1  L1  {L2}  TRANSMITTER FA  CEQ2  CEQ2  L3  {L4}  RECEIVER FA

FIG. 16

PHASE 1

PHASE 2

PHASE 3

GROUND

THREE PHASE POWER LINE

L5
L6
L7

TRANSFORMER

CEO1

L1

L2

TRANSMITTER
FA

RECEIVER
FA

PHASE 1

PHASE 2

PHASE 3

GROUND

THREE PHASE POWER LINE

L8
L9
L10

CEO2

CEO2

L3

L4

44

# FIG. 17

PHASE 1 ——————————————————————————— PHASE 1

PHASE 2 ——————————————————————————— PHASE 2

THREE PHASE POWER LINE   THREE PHASE POWER LINE

PHASE 3 ————————————————————————— PHASE 3

L5   L6

ONE PHASE TRANSFORMER

GND ——————————————————————————— GND

TRANSMITTER FA
RECEIVER FA

Ceq1   Ceq2

L2   L4

L1   L3

EP 0 470 185 B1

FIG. 18

—— POWER LINE SPREAD SPECTRUM TRANSMITTER ——

FIG. 18A

—— POWER LINE SPREAD SPECTRUM RECEIVER ——

EP 0 470 185 B1

FIG. 19

FROM THE RECEIVER

9000Hz CARRIER FILTER

115

XR2208

DM74193

117

XR 2123A

TO THE TRANSMITTER

113

1200Hz BAUD FILTER

FULL WAVE RECTIFIER

47

EP 0 470 185 B1

FIG.20

UPPER GROUND CABLE:
R ≈ 0.7 Ω/MILE
C ≈ 16 nF/MILE
L ≈ 1.84 mH/MILE

UNDER GROUND CABLE:
R ≈ 0.7 Ω/MILE
C ≈ 0.38 μF/MILE
L ≈ 0.64 mH/MILE

EP 0 470 185 B1

FIG. 21

EP 0 470 185 B1

13.2 KILOVOLTS

69 KILOVOLTS

C B A

LARGE TRANSFORMER

135

THREE PHASE HIGH VOLTAGE COUPLERS

B C

A

GROUND

129 A

B C

A

127

126 240 VOLTS

23 COUPLER

DISTRIBUTION TRANSFORMER

120 VOLTS

121 MODEM

135

137 COUPLER

131

MODEM 133

SUBSTATION PHONE LINE

137 COUPLER

141

VAX COMPUTER

139

MASTER MODEM

119

125 METER

FIG. 22

50

FIG. 22A

FIG. 23

# FIG 24

EP 0 470 185 B1

DISTRIBUTION LINE AT 13.8 KV

FIG. 25

EP 0 470 185 B1